# EUROPEAN PATENT APPLICATION

(11) **EP 4 432 487 A1**
(43) Date of publication of application: **18.09.2024**
(21) Application number: 23161592.3
(22) Date of filing: 13.03.2023
(51) Int. Cl.: H01S 3/094, H01S 3/04, H01S 3/06, H01S 3/13, H01S 3/042, H01S 3/23

(54) **RADIATION AMPLIFYING SYSTEM**

(71) Applicant: Universität Stuttgart, 70174 Stuttgart (DE)
(72) Inventor: WOLTER, Jan-Hinnerk, 70806 Kornwestheim (DE); VOSS, Andreas, 45138 Essen (DE); ABOUD AHMED, Marwan, 70565 Stuttgart (DE)
(74) Representative: Pfiz/Gauss Patentanwälte PartmbB

(57) **Abstract**

A radiation amplifying system comprising a laser active medium for amplifying a to be amplified radiation field and an optical assembly which defines an optical path for a pumping radiation field with which the laser active medium is optically pumped, wherein the optical path comprises a plurality of branches and wherein the optical assembly comprises at least two focusing units and a deflection arrangement wherein the laser active medium is spatially arranged between the at least two focusing units and the focusing units define several pumping branches of the optical path for focusing the pumping radiation field which propagates along the optical path onto a pumping area in the laser active medium and wherein several deflection units of the deflection arrangement define respective deflection branches of the optical path for connecting the several pumping branches and wherein the optical path comprises at least one correction branch for correcting at least one mismatch in the optical assembly to a focusing condition.

## Description

The invention relates to a radiation amplifying system comprising a laser active medium for amplifying a to be amplified radiation field and an optical assembly which defines an optical path for a pumping radiation field for optically pumping the laser active medium.

The object underlying the invention is to improve such radiation amplifying systems.

This object is achieved by embodiments of the invention by a radiation amplifying system comprising a laser active medium for amplifying a to be amplified radiation field and an optical assembly which defines an optical path for a pumping radiation field with which the laser active medium is optically pumped, wherein the optical path comprises a plurality of branches and wherein the optical assembly comprises at least two focusing units and a deflection arrangement wherein the laser active medium is spatially arranged between the at least two focusing units and the focusing units define several pumping branches of the optical path for focusing the pumping radiation field which propagates along the optical path onto a pumping area in the laser active medium und wherein several deflection units of the deflection arrangement define respective deflection branches of the optical path for connecting the several pumping branches and wherein the optical path comprises at least one correction branch for correcting at least one mismatch in the optical assembly to a focusing condition.

For example, an advantage of the invention is that with the at least two focusing units and the deflection arrangement the pumping radiation field can be guided many times through the laser active medium for efficiently pumping the same while with the at least correction branch mismatches in the assembly, which are for example due to aberrations in the optical elements of the assembly and/or due to spatial constrains in the set-up of the elements of the optical assembly, are corrected for and advantageously a blurring and a widening of the pumping radiation field is at least reduced and therefore the pumping efficiency during the many times of propagation of the pumping radiation field through the laser active medium is enhanced.

In particular, the deflection arrangement can be optimized for connecting a large number of pumping branches, for example at least ten pumping branches, preferably at least thirty pumping branches, in order to increase the passages of the pumping radiation field through the laser active medium and potentially therewith associated mismatches can be corrected by the at least one correction branch.

Advantageously, the fine tuning for achieving a good quality of the pumping radiation field along the optical path is achieved by the at least one correction branch.

In particular, one focusing condition is that the pumping area within the laser active medium is distanced to the at least two focusing units with the respective focal length.

An advantage thereof is, that the pumping radiation field is focused in the pumping area.

This can be explained by recalling the thin lens formula 1/G+1/B=1/F for an optical imaging of an object which is a distance G away from the principal plane of an optical lens onto an image which is at a distance B away from the principal plane of the optical lens and wherein F is the focal length of the optical lens.

Accordingly, a collimated beam of the pumping radiation field which represents an object at the distance G=infinity and which hits one of the at least two focusing units has its focused image the focal length F away from the respective focusing unit (i.e., B=F) and is therefore focused in the pumping area if the pumping area is distanced with the focal length F from the respective focusing unit. Vice versa, the pumping area distanced the focal length F away from one of the two focusing units (i.e., G=F) is imaged by this focusing unit at B=infinity. That is the pumping radiation field coming from such distanced pumping area is transformed by this focusing unit to a collimated beam.

In particular, the pumping radiation coming from the pumping area which is distanced the focal length F away from one of the at least two focusing units is transformed by this focusing unit to a collimated beam and this collimated beam is deflected by the deflection arrangement to one of the at least two focusing units, for example to the one focusing unit from which this collimated beam is coming, such that the radiation field of this collimated beam is focused again onto the pumping area.

Advantageously, therewith the pumping area is imaged onto itself by the optical assembly. In particular, the focusing area is imaged onto itself in a one to one imaging. In particular, the pumping area is imaged onto itself in a focused manner.

As a side note, if one had an optical system with one lens which has a focal length F' for a one to one imaging of this object the object would have to be distanced twice the focal length F', i.e. 2F', from the principal plane of the optical lens and its image would be distanced twice the focal length from the principal plane, wherein in the one to one imaging the object and its image have the same size.

That is, for the present optical assembly with a telescope like optics typically at least one focusing condition, in particular at least the focusing condition for an one to one imaging, is different than in an optical system with only one lens. Nonetheless, a focusing condition for the present optical assembly with a telescope like optics can be derived from a focusing condition for the special case of an one to one imaging by one lens with a focal length F' as follows. Consider conceptually the one lens as two halves each of which having a focal length of 2F', that is half of the focusing power of the one lens, and separating the two halves. In between the two halves there will be a collimated beam. Each of the halves has a focal length of F=2F' and the object has a distance G=F from the one half and the image of the object has a distance B=F from the other half.

In particular, one focusing condition is, that the deflection units have to be in a proper distance to the respective focusing unit in order to produce a sharp image and to avoid a widening of the pumping radiation field.

Preferably, the optical assembly is designed, such that at least along the deflection branches the pumping radiation field propagates in an at least approximately collimated manner.

For example, for an idealistic optical system a reflective surface of a deflection unit should be distanced to the focusing unit by the focal length of the focusing unit.

In embodiments of the invention one has a telescope like imaging system in which in particular a so called 4F-condition as focusing condition has to be fulfilled as exemplarily described hereafter.

In particular, according to the 4F-condition in a telescope like optics with two focusing optics A and B, here in particular with the at least two focusing units, an object O is positioned the focal length F away from the focusing optics A and the image I is produced the focal length F away from the second focusing optics B and the focusing optics A and B are distanced to each other by two times the focal length F such that in total the image I is distanced to the object O by four times the focal length F.

At least if the pumping radiation field multiple times passes through the optical system mismatches to this 4F-condition worsen the quality of the pumping radiation field. For example, these mismatches result in a widening of the radiation field.

In the telescope like optics, a radiation field propagates from the object to a first focusing optics and from the first focusing optics to a second focusing optics and after passing the second focusing optics the object is imaged.

In embodiments of the invention the imaging of the pumping area onto itself by the pumping radiation field propagating from the pumping area to one of the at least two focusing units and further to the associated deflection unit and back from that deflection unit to said one of the at least two focusing units and further again to the pumping area is of that kind of a telescope like optics.

Advantageously, for having the pumping radiation field being focused in the pumping area, the pumping area has to be distanced with a focal length F from the respective focusing unit. This is in particular due to the conditions for the optics as described above.

In particular, between the at least two focusing optics in a telescope like optics, and in embodiments of the invention along the branches from one of the at least two focusing units to the associated deflection unit and back to the one of the at least two focusing units, the radiation field is preferably essentially collimated.

In particular, the object, here for example the pumping area, has a spatial extension and is not only located in the focal point of the focusing optics, here for example in the focusing point of one of the focusing units. Therefore, the different rays of the essentially collimated radiation field between the at least two focusing optics are not exactly parallel to each other because they steem from different spatial locations of the object.

In particular, in a geometrical plane which is parallel to the principal plane of the focusing optics and distanced to the principal plane by the focal length F of the focusing optics the different rays of the essentially collimated radiation field all cross each other.

In particular, in the geometrical plane distanced by the focal length F from the principal plane of the focusing optics the respective spatial information in each of the different rays are at least essentially entirely transferred to the Fourier space. Therefore, this plane is also called the Fourier plane. In this plane the essentially collimated radiation field contains the information of the Fourier transformation of the object.

A diameter of the at least approximately collimated beam coming from one of the focusing units is the smallest at the Fourier plane. The diameter becomes the larger the further the beam propagates further away from the Fourier plane.

In particular, at the distance of two times the focal length F the beam has the same diameter like at the focusing unit.

Advantageously, in order to maintain a diameter of the pumping radiation field, the at least two focusing optics in a telescope like optics, that is in embodiments of the invention the at least two focusing units, have to be distanced to each other by twice the focal length F.

This is in particular preferable in embodiments of the invention because the pumping radiation field should be concentrated on the pumping area and the diameter of the pumping radiation field should not widen.

In particular, because for these telescope like optics the object and its image are distanced by four times the focal length F, this focusing condition is also called the 4F-condition.

The discussion herein, in particular of the 4F-condition, mainly considers examples in which at least mostly, in particular except for the focusing units, flat optical elements are used.

In particular, in the deflection arrangement at least mostly only flat optical elements are used.

For example, flat optical elements comprise flat mirrors, prisms with planar surfaces, plates with parallel and planar surfaces and the like.

In embodiments with exactly one or several non-planar optical elements. typically the effect of the curvature of the at least one non-planar optical element may have to be taken into account.

For example, non-planar optical elements comprise spherical optical elements, aspherical optical elements, freeform optical elements and the like, for example cat's eye designed reflectors and also prisms with curved surfaces.

In such embodiments with non-planar optical elements, the at least one focusing condition, in particular the 4F-condition, has to be fulfilled, too, but the discussed distances, for example the distance between the object and its image of four times the focal length F, may have to be corrected for the effect of the curvature of the at least one non-planar optical element.

In some advantageous embodiments, at least one non-planar optical element is arranged in at least one correction branch, for example in a correction unit. In particular, at least one non-planar optical element preferably in at least one correction branch is used to at least partly correct at least one mismatch and for example to deflect the radiation filed. For example, therewith the number of required optical elements can be reduced.

If a radiation field propagates only once through a telescope like optics, a mismatch to the focusing condition of the telescope like optics, in particular to the 4F-condition, is not too adverse because typically the negative impact of the mismatch is not too large. However, if a radiation field passes multiple times through a telescope like optics like in preferred embodiments of the invention a mismatch to the focusing condition of the telescope like optics, in particular to the 4F-condition, sums up and has a major negative impact on the (pumping) radiation field, for example on its beam quality.

In particular, if the diameter of the radiation field widened during the multiple passages through the optics, larger optical elements would be needed and/or losses in the radiation field would occur at optical elements which are too small for the widened radiation field.

Similarly, with respect to the deflection arrangement at least one focusing condition has to be fulfilled.

In particular, the optics of the imaging from the one set of deflection units associated with the one of the at least two focusing units through the one of the at least two focusing units and through the other of the at least two focusing units onto the other set of deflection units associated with the other focusing unit is a telescope like optics and therefore the respective focusing condition for a telescope like optics has to be fulfilled. In particular, the respective 4F-condition for this optics has to be fulfilled.

In particular, due to this optical arrangement the deflection units associated to one of the at least two focusing units have to be distanced to the respective focusing unit by the focal length F of the respective focusing unit.

In particular, due to this optics, the at least two focusing units have to be distanced by the sum of their focal length F.

In particular, with respect to this telescope like optics from one set of deflection units through the at least two focusing units to the other set of deflection units, a focusing condition is that the pumping area has to be positioned in the middle between the at least two focusing units and at a distance of the focal length F away from each focusing unit.

However, in real optical systems typically one or more focusing conditions cannot be fully met and aberrations cannot be avoided. In embodiments of the invention the therewith associated mismatches are corrected for by the at least one correction branch.

Preferably, the at least two focusing units and the laser active medium are arranged to fulfill the one condition, that the focal point of the at least two focusing units is positioned within the pumping area.

However, the pumping radiation field has a finite width and in real optical systems not all rays of the pumping radiation field run through the focal point, which is anyway an idealized point without spatial extension.

In particular, the deflection branches are however too short to fulfill a focusing condition, in particular a focusing condition in the telescope like optics, for example the 4F-condition. This is for example in order to achieve a compact design of the radiation amplifying system and/or due to spatial constrains in positioning the deflection units. Advantageously, an additional optical path length provided by at least one correction branch and/or at least one correction unit corrects for this mismatch.

In advantageous embodiments, at least one correction branch corrects for a mismatch in a focusing condition of the telescope like optical system of the at least two focusing units and the deflection arrangement.

Preferably, at least one correction branch corrects for a mismatch in the 4F-condition for the optical system of the at least two focusing units and the deflection arrangement.

In particular, at least one correction branch corrects for that at least along one deflection branch the optical path length is too short. In particular the optical path length comprises a part from one of the at least two focusing units to the deflection arrangement and for example a part through the deflection arrangement and a part from the deflection arrangement to one of the at least two focusing units..

In particular, said optical path length is too short, because the respective deflection unit in said deflection branch has a distance to said focusing unit which is smaller than required. In particular, therewith a mismatch in the 4F-condition occurs which is preferably corrected for by at least one correction branch.

In particular, in embodiments of the invention the finding is used, that the mismatch to a focusing condition in a single or in several branches can be effectively and efficiently corrected for in a branch, namely in at least one correction branch, which is different to the branch in which the mismatch occurs.

Advantageously, a mismatch which occurs in at least one branch of the optical path is corrected for in at least one correction branch of the optical path, with the correction branch being arranged before or after the branch in which the mismatch occurs and for example at least one other branch is between these two branches.

In particular, herewith the finding is used that for correcting a mismatch, in particular a mismatch related to the 4F-condition, can be corrected for in another branch.

Preferably, several pumping branches and deflection branches are subsequently directly connected to each other and along these branches mismatches to the focusing condition sum up and a thereafter arranged correction branch corrects at least partly the mismatches.

In some preferred embodiments, at least one sixth, preferably at least one fifth, for example at least one quarter, of the pumping branches and the deflection branches are subsequently directly connected to each other and then one correction branch is arranged.

In some advantageous embodiments, one correction branch, for example the only correction branch in the optical path, is arranged at least approximately in the middle of the passage of the pumping radiation field through the system of the at least two focusing units and the deflection arrangement.

For example, at least approximately the same number of pumping branches is arranged in the propagation direction of the pumping radiation field before the correction branch and after the correction branch.

No further details about the set-up of the at least one correction branch have been given so far.

In some preferred embodiments a mismatch is at least partly, for example at least approximately fully, corrected for by the optical path length of at least one correction branch.

In some advantageous embodiments a mismatch is at least partly, for example at least approximately fully, corrected for by a correction unit. In particular, the correction unit is an optical unit of at least one optical element, for example of several optical elements which are arranged for achieving the desired correction. Preferably, at least one correction unit is a misadjusted correction unit. In particular a misadjustment in at least one correction unit affects the quality of the pumping radiation field. For example, a misadjustment in at least one correction unit affects at least one property of the pumping radiation field. The at least one affected property is for example the diameter of the radiation field. For example, the correction unit comprises a telescope like optics wherein in particular the telescope like optics is misadjusted.

Advantageously, the misadjustment in the correction unit at least partly compensates the mismatch which is to be corrected for.

In preferred embodiments the optical assembly comprises at least one correction component which defines at least one correction branch.

For example, at least one correction component defines the optical path length of its correction branch.

For example, at least one correction component comprises a correction unit.

Preferably, at least one correction component comprises at least one deflection element, in particular for deflecting an incoming part of its correction branch, for example directly or indirectly via at least one other deflection element, into an outgoing part of its correction branch.

In advantageous embodiments at least one correction component comprises at least one adjustable deflection element.

Preferably, with at least one adjustable deflection element an optical path length of the correction branch and/or its influence on the shape of the pumping radiation field is adjustable.

For example, with at least one adjustable deflection element a misadjustment in at least one correction unit can be tuned.

An advantage thereof is in particular that the optical system of the at least two focusing units and the deflection arrangement can be mounted in a suitable manner but in a simplified manner, because the set-up of the system has not to be fine-tuned to meet the at least one focusing condition because the fine-tuning can be achieved with the adjustable deflection element of the correction component.

For example, the adjustable deflection element of the correction component is a mirror.

In particular, the position of the adjustable deflection element in the correction component can be adjusted in the direction of propagation of the pumping radiation field. For example, therewith the length of the correction branch and/or a misadjustment in a correction unit is adjustable.

In some preferred embodiments, at least one correction branch, in particular at least one adjustable deflection element of at least one correction component, is adjusted with respect to the shape of the pumping radiation field, for example to reduce a widening of the pumping radiation field.

In the alternative or in addition in advantageous embodiments, at least one correction branch, in particular the adjustable deflection element of the correction component, is adjusted with respect to an efficiency of the radiation amplifying system, in particular with respect to an amplification of the to be amplified radiation field, for example with respect to a power of the to be amplified radiation field after passing through the laser active medium and/or with respect to a pumping energy introduced by the pumping radiation field into the laser active medium.

In preferred embodiments, the optical assembly is calibrated during its installation. In particular, at least one correction branch is adjusted during the installation to correct for at least one mismatch.

In some advantageous embodiments, the radiation amplifying system comprises at least one sensor for detecting, in particular directly or indirectly, at least one property of the radiation amplifying system, preferably at least one property of the to be amplified radiation field and/or of the pumping radiation field and/or of the optical assembly, and the detected values of the sensor are used to adjust at least one correction branch, in particular the adjustable deflection element of the correction component.

For example, the at least one property detected by the sensor is one or several of a shape of the pumping radiation field and/or an amplification of the to be amplified radiation field and/or a power of the to be amplified radiation field and/or an energy introduced by the pumping radiation field into the laser active medium.

Preferably, the radiation amplifying system comprises a controller which performs the adjustment of in particular at least one correction branch and/or the adjustable deflection element, preferably performs the adjustment based on the detected values of the sensor. Advantageously, the controller evaluates the values detected by the sensor.

In particular, the adjustment is achieved on demand by a user.

With respect to the correction no further details have been given so far.

In particular, with the correction by the at least one correction branch a mismatch, to which the pumping radiation field is exposed to, is at least reduced. In some preferred embodiments, at least one correction branch, in particular its optical path length and/or at least one correction unit in the correction branch, is defined to at least reduce a mismatch which the pumping radiation field is exposed to when propagating along the optical path in the part of the optical assembly which is with respect to the propagation direction of pumping radiation field before this at least one correction branch.

In particular, an optical path length of the at least one correction branch is at least as long as the differences between the optical path length of at least several pumping branches and/or deflection branches, for example the optical path length of each pumping branch and deflection branch, before the correction branch in the optical assembly and the respective ideal optical path length of these branches. The ideal optical path length is defined such that no mismatch would occur.

In some preferred embodiments, at least one correction branch, in particular its optical path length and/or at least one correction unit in the correction branch, is defined to at least reduce a mismatch which the pumping radiation field is exposed to when propagating along the optical path in the part of the optical assembly which is with respect to the propagation direction of pumping radiation field after this at least one correction branch.

In particular, an optical path length of the at least one correction branch is at least as long as the differences between the optical path length of at least several pumping branches and/or deflection branches, for example the optical path length of each pumping branch and deflection branch, after the correction branch in the optical assembly and the respective ideal optical path length of these branches. The ideal optical path length is defined such that no mismatch would occur.

In some preferred embodiments, at least one correction branch, in particular its optical path length and/or at least one correction unit in the correction branch, is designed to at least approximately equalize the exposed to mismatch.

For example, the optical path length of at least one correction branch is at least approximately equal to the sum of the differences between the optical path length of the pumping and deflection branches relative to their ideal optical path length.

In other advantageous embodiments at least one correction branch, in particular its optical path length and/or at least one correction unit in the correction branch, is designed to over-compensate the exposed to mismatch.

For example, the optical path length of at least one correction branch is longer than the sum of the differences between the optical path length of the pumping and deflection branches relative to their ideal optical path length.

For example, an advantage thereof is that after the correction branch the overcompensation will correct for a mismatch to which the pumping radiation field will be exposed to and the pumping radiation field will propagate in a more balanced manner along the optical path.

No further details about the design and/or arrangement of at least one correction branch have been given so far.

In particular, at least one correction branch comprises at least one incoming part, which in particular extends from one of the at least two focusing units to a deflection element of the correction component, and an outgoing part, which in particular extends from one deflection element of the correction component to one of the at least two focusing units.

Preferably, the incoming part and the outgoing part of the correction branch extend between the same deflection element and the same focusing unit.

Advantageously, the ingoing part and/or the outgoing part of the correction branch run at least essentially parallel to the optical axis.

In particular the ingoing part and the outgoing part of the correction branch run at least essentially parallel to each other.

In some preferred embodiments, the ingoing part and the outgoing part of the correction branch are distanced to each other.

In some advantageous embodiments, the ingoing part and the outgoing part of the correction branch fall upon each other.

In preferred embodiments, at least a part of at least one correction branch, for example a correction part, is in the radial direction further away from the optical axis than the plurality of deflection branches and/or pumping branches.

In particular, at least a part of at least one correction branch, for example a correction part, runs in an angle to the optical axis, in particular at least approximately perpendicular to the optical axis.

In particular, a correction part is defined in at least one correction branch preferably, with respect to the propagation direction of the pumping radiation field, between the ingoing part and the outgoing part of this correction branch.

For example, the correction part of the correction branch is defined between a deflection element and the adjustable correction element of the correction component.

In particular, in the correction part of the correction branch a correction for the mismatch is imposed to the pumping radiation field, for example by manipulating the shape of the pumping radiation field and/or by adjusting the length of the correction part.

In advantageous embodiments, the direction of propagation of the pumping radiation field is reversed in at least one correction branch.

In particular, therewith the pumping radiation field propagates along the same pumping branches and deflection branches before entering this one correction branch and after exiting this one correction branch by propagating along these same branches in reverse propagation direction and therefore the pumping of the laser active medium is increased.

In some advantageous embodiments, at least one correction branch is spatially arranged on a side with respect to one of the at least two focusing units, which is opposite to the side at which the laser active medium is arranged.

This is particularly preferable for a focusing unit which is at least for the pumping radiation field transparent.

An advantage hereof is for example that on the side opposite to the side with the laser active medium usually more space for arranging the correction branch is available and for example therefore the set-up of the optical assembly can be simplified.

In advantageous embodiments, at least one correction branch is spatially arranged in the space, in particular in the axial space with respect to the optical axis, between the at least two focusing units.

For example, therewith a more compact set-up of the optical assembly can be achieved.

In particular, a correction branch which is arranged in the space between the at least two focusing units is suitable for a focusing unit which is at least for the pumping radiation field reflective.

In some preferred embodiments, the pumping radiation field is introduced in the optical system of the at least two focusing units and the deflection arrangement in an at least essentially collimated manner.

In the alternative or in addition the object of the invention is solved in embodiments of the invention by a radiation amplifying system which comprises a laser active medium for amplifying a to be amplified radiation field and an optical assembly which defines an optical path for a pumping radiation field with which the laser active medium is optically pumped, wherein the optical path comprises a plurality of branches and wherein the optical assembly comprises at least two focusing units and a deflection arrangement and wherein the laser active medium is spatially arranged between the at least two focusing units and the focusing units define several pumping branches of the optical path for focusing the pumping radiation field which propagates along the optical path onto a pumping area in the laser active medium and wherein several deflection units of the deflection arrangement define deflection branches of the optical path for connecting the several pumping branches and wherein the pumping radiation field is introduced to the optical system of the at least two focusing units and the deflection arrangement with a deviation from a manner set by a focusing condition, wherein the deviation corresponds at least partly to a mismatch in the optical system of the at least two focusing units and the deflection arrangement to a focusing condition.

In particular, an advantage hereof is that upon propagation of the pumping radiation field along the optical path through the system of the at least two focusing units and the deflection arrangement, due to the mismatch in the optical system the deviation in the pumping radiation field from the manner set by the focusing condition becomes smaller and preferably along at least a part of the optical path through the optical system of the at least two focusing units and the deflection arrangement the pumping radiation field fulfills at least essentially the focusing condition.

In particular, the deviation in the introduced pumping radiation field from the at least one focusing condition is contrary to a deviation set to the pumping radiation field by the mismatch in the optical assembly.

For example, the deviation is such that the pumping radiation field at least approximately at half way along the optical path through the optical system of the at least two focusing units and the deflection arrangement fulfills at least essentially the focusing condition.

In some preferred embodiments, the deviation is such that the pumping radiation field at least approximately at half way along the optical path from the introduction to the optical system of the at least two focusing units and the deflection arrangement to the first or only correction branch among the plurality of deflection and pumping branches fulfills at least essentially the focusing condition.

In particular, there is a correction branch in the optical path before entering the optical system of the at least two focusing units and the deflection arrangement at which the proper deviation is set to the pumping radiation field.

In particular, the deviation is a deviation from a collimated manner.

For example, the radiation amplifying system, in particular the optical assembly, comprises a collimating unit at which a pumping radiation field from a source is collimated in a desired manner.

Depending on the embodiment the collimated pumping radiation field from the collimating unit is directly introduced to the optical system or the deviation is applied to the collimated pumping radiation field along the one correction branch before entry of the optical system.

No further details concerning the at least two focusing units have been given so far.

In particular, the optical axis is defined by the at least two focusing units and their arrangement relative to each other.

In some advantageous embodiments at least one focusing unit, that is in particular one or both of the at least two focusing units, is built by a respective single focusing element.

In some preferred embodiments at least one focusing unit, that is in particular one or both of the at least two focusing units, is built by a plurality of focusing elements.

In some preferred embodiments at least one focusing unit, that is in particular one or both of the at least two focusing units, is transparent at least for the pumping radiation field.

In particular, the single focusing element or at least one focusing element, preferably at least several, for example all, focusing elements of the plurality of focusing elements of the transparent focusing unit is/are at least for the pumping radiation field transparent.

In particular, the transparent focusing unit comprises at least one lens as a focusing element.

For example, an advantage of a transparent focusing unit is that the pumping radiation field passes through the transparent focusing unit and that the pumping branch at the one side of the transparent focusing unit can be transferred to a deflection branch at the other side and accordingly a space at the side with respect to the transparent focusing unit which is opposite to the side at which the laser active medium is arranged can be used to arrange deflection units and advantageously in this space the deflection units can be arranged with less spatial constrains than between the at least two focusing units.

In particular, the transparent focusing unit has a finite thickness which introduces aberrations to the pumping radiation field which are advantageously corrected for by at least one correction branch.

In some advantageous embodiments, at least one focusing unit, that is in particular one or both of the at least two focusing units, is reflective for at least the pumping radiation field.

In particular, the single focusing element or at least one focusing element, preferably several, for example all, focusing elements of the plurality of focusing units of the reflective focusing unit is/are reflective at least for the pumping radiation field.

In particular, the reflective focusing unit comprises at least one, for example curved, reflective surface.

Preferably, the reflective focusing unit comprises at least one mirror, for example parabolic mirror, as a focusing elements.

For example, one advantage thereof is that reflective focusing units are suitable and resistant for pumping radiation fields with high power, for example for pumping radiation fields with powers of 1 kW or more, in particular 10 kW or more and for example up to powers of 100 kW.

In particular, the pumping radiation field hits the reflective focusing unit off the optical axis and at a region with finite extent at which for example the reflective surface is differently curved such that aberrations are introduced to the pumping radiation field which advantageously are corrected for by at least one correction branch.

Preferably, the at least two focusing units have at least approximately the same focal length.

In some advantageous embodiments, the at least two focusing units are differently designed, for example one is reflective and the other transparent.

In some preferred embodiments, the at least two focusing units are at least mostly designed the same.

With respect to the deflection arrangement no further details have been given so far.

In some preferred embodiments, at least several deflection units, in particular at least most of the deflection units, for example all deflection units, of the deflection arrangement are arranged spatially between the focusing units.

In particular, therewith a compact design of the set-up of the optical system can be achieved. In particular, the arrangement of at least several deflection units spatially between the focusing units is advantageous if at least one focusing unit is reflective.

For example, for the arrangement of at least several deflection units between the at least two focusing units there are spatial constrains due to which a positioning of the deflection units in accordance to at least one focusing condition cannot be realized and an accompanying mismatch to the focusing condition is corrected for by at least one correction branch.

In some advantageous embodiments at least several deflection units of the deflection arrangement are arranged spatially on a side which is with respect to one focusing unit opposite to a side on which the laser active medium is arranged.

In particular, at least one focusing unit is spatially arranged between at least several deflection units and the laser active medium.

In particular such an arrangement of at least several deflection units is preferable for a transparent focusing unit.

For example, an advantage of the arrangement of several deflection units on a side which is with respect to one focusing unit opposite to the side at which the laser component is arranged is that there typically more space is available for positioning the deflection units.

In particular, there is one set of deflection units which are with respect to one of the at least two focusing units on a side opposite to the side at which the laser active medium is arranged and another set of deflection units which are with respect to the other of the at least two focusing units arranged on a side which is opposite to the side at which the laser active medium is arranged.

In some advantageous embodiments each deflection unit of at least several deflection units, for example of at least most of the deflection units, for example of all deflection units, of the deflection arrangement is built by a respective single deflection element.

In particular, an advantage thereof is that for each of these deflection units only a single deflection element is needed and therefore less deflection elements are needed for the deflection arrangement and therefore a set-up of the deflection units is simplified and/or the deflection arrangement is cheaper to build.

In particular a respective single deflection element of a deflection unit transfers an incoming part of a respective deflection branch to an outgoing part of this deflection branch.

In some preferred embodiments, each deflection unit of at least several deflection units, in particular of at least most deflection units, for example of all deflection units, of the deflection arrangement is built by several deflection elements, in particular by a pair of deflection elements.

For example, the several deflection elements are reflective at least for the pumping radiation field.

In particular, an advantage thereof is that due to the several deflection elements a deflection branch defined by the deflection unit can be designed more flexible.

In particular for reflective deflection elements an advantage is that these can be used for pumping radiation fields with a high power.

In particular, an incoming part of a respective deflection branch is deflected from one deflection element of the deflection unit to another deflection element of the deflection unit and one deflection element of the deflection unit provides an outgoing part of the deflection branch which is defined by this deflection unit.

Preferably, a deflection element of a pair of deflection elements deflects an incoming part of the respective deflection branch to an intermediate part of the deflection branch which extends to the other deflection element of the pair of deflection elements which deflects the intermediate branch to the outgoing part of the deflection branch which is defined by the deflection unit built by this pair of deflection elements.

In some advantageous embodiments, at least one deflection element is part of several deflection units.

For example, the at least one deflection element is part of two different deflection units.

In particular, several deflection elements, in particular most of the deflection elements of the deflection arrangement, for example all deflection elements of the deflection arrangement, are each part of several deflection units, for example part of two different deflection units.

For example, therewith the deflection arrangement can be built with less deflection elements and/or in a more compact manner.

In particular, the deflection arrangement comprises a set of deflection units associated with one of the at least two focusing units and another set of deflection units associated with the other of the at least two focusing units.

In particular, a deflection unit associated to one of the at least two focusing units defines a deflection branch which extends from the one focusing unit the deflection unit is associated to, to this deflection unit and back to this focusing unit.

For example, both sets of deflection units are arranged spatially between the at least two focusing units.

Preferably at least one deflection element is, in particular at least several, for example at least most of the deflection elements are each, part of one deflection unit associated with one of the at least two focusing units as well as part of a deflection unit associated with the other of the at least two focusing units.

In some preferred embodiments the set of deflection units associated with one of the at least two focusing units is arranged at one side which is with respect to this one focusing unit opposite to the side at which the laser active medium is arranged.

Preferably, at least several deflection units, for example at least most of the deflection units, in particular at least the deflection units of one set of the deflection arrangement, are arranged in a radial distance to the optical axis of the radiation amplifying system and arranged subsequently in a circumferential direction around the optical axis.

In particular, the several deflection branches are designed in an at least essentially similar manner.

Preferably, the incoming part, which in particular extends from one of the focusing units to a respective deflection unit, and the outgoing part, which in particular extends from the deflection unit to one of the focusing units, of a same deflection branch run at least essentially parallel to each other but in particular distanced to each other.

In particular, the incoming parts and the outgoing parts of at least most, for example of all, deflection branches run at least essentially parallel to each other but in particular distanced to each other.

Preferably the incoming parts and/or outgoing parts of at least some, in particular of at least most, for example of all, deflection branches run at least essentially parallel to the optical axis of the system.

In particular, at least several deflection branches, in particular deflection branches designed by deflection units associated to one of the at least two focusing units, are at least in so far similar designed that with a rotation around the optical axis of the optical system they can be mapped onto each other.

Preferably, the deflection units of the deflection arrangement are fixedly arranged relative to each other and in particular relative to the focusing units.

Advantageously, therewith the arrangement of the deflection units is fixed and potential mismatches in the arrangement are at least approximately corrected for by the at least one correction branch.

In particular a respective deflection branch connects two pumping branches.

With respect to the pumping area, the pumping branches and the laser active medium no further details have been given so far.

In particular, in the pumping area a single pumping spot or several pumping spots, for example an array of pumping spot, is/are defined and each pumping branch extends through a respective pumping spot.

In particular, the pumping branches run through the laser active medium and extend in particular from one focusing unit to the other focusing unit.

For example, the pumping branches are defined in a similar manner with respect to the optical axis.

In particular, by a rotation around the optical axis each of at least several pumping branches can be mapped onto at least another respective pumping branch, in particular each pumping branch can be mapped onto another respective pumping branch.

In particular, the radiation amplifying system comprises an optical device for defining an optical passage way for the to be amplified radiation field.

In particular, the passage way for the to be amplified radiation field runs through the pumping area and advantageously through the laser active medium. Accordingly the to be amplified radiation field transmits through the laser active medium.

In some preferred embodiments a single part, for example a thin disk, provides the laser active medium.

In some advantageous embodiments, there are several parts, for example thin disks, which provide the laser active medium. Preferably, the several parts are arranged adjacently to each other.

In preferred embodiments the laser active medium is clamped between two bodies, preferably between two heat spreading bodies which are advantageously built by a good thermal conducting material.

Advantageous features of the laser active medium and the laser amplifying component comprising the laser active medium are disclosed in EP 3 309 913 A1 and in EP 3 309 914 A1 to which it is referred to for advantageous details of the laser amplifying component.

Above and below at least features and elements which are described to be provided advantageously and/or preferably and/or for example and/or in particular and/or the like are optional features and optional elements which for example provide inventive improvements and which are not essential for the success of the basic idea of the invention.

Above and below the formulation "at least essentially" in connection with a feature is in particular to be understood that technically reasoned and/or technically irrelevant deviations are also comprised by the at least essentially provided features.

Above and below the formulation "at least approximately" in connection with a provided feature is in particular to be understood that the feature is provided at least essentially and/or for example deviations within 10%, in particular within 5%, preferably within 1%, advantageously within 0,1%, from the provided feature are comprised by an at least approximately provided feature.

Above and below the formulation "at least most of" in connection with a plurality of elements at least most of which have a feature, is in particular to be understood, that at least 50%, in particular at least 80%, for example at least 90% of the elements have this feature and/or that in particular all except for 5, for example all except for one or two, of these elements have this feature.

The solutions in accordance with the present invention comprise, in particular, the combinations of features defined by the following embodiments numbered consecutively.
1. Radiation amplifying system (100) comprising a laser active medium (124) for amplifying a to be amplified radiation field (112) and an optical assembly (142) which defines an optical path (144) for a pumping radiation field (114) with which the laser active medium (124) is optically pumped, wherein the optical path (144) comprises a plurality of branches (164, 176, 252) and wherein the optical assembly (142) comprises at least two focusing units (152, 154) and a deflection arrangement (172) wherein the laser active medium (124) is spatially arranged between the at least two focusing units (152, 154) and the focusing units (152, 154) define several pumping branches (164) of the optical path (144) for focusing the pumping radiation field (114) which propagates along the optical path (144) onto a pumping area (156) in the laser active medium (124) and wherein several deflection units (174) of the deflection arrangement (172) define respective deflection branches (176) of the optical path for connecting the several pumping branches (164) and wherein the optical path (144) comprises at least one correction branch (252) for correcting at least one mismatch in the optical assembly (142) to a focusing condition.
2. Radiation amplifying system (100) according to embodiment 1, wherein the optical assembly (142) is designed, such that at least along the deflection branches (176) the pumping radiation field (114) propagates in an at least approximately collimated manner.
3. Radiation amplifying system (100) according to one of the preceding embodiments, wherein at least one correction branch (252) corrects for a mismatch in a focusing condition of the telescope like optical system of the at least two focusing units (152, 154) and the deflection arrangement (172).
4. Radiation amplifying system (100) according to one of the preceding embodiments, wherein at least one correction branch (252) corrects for a mismatch in the 4F-condition for the optical system of at least two focusing units (152, 154) and the deflection arrangement (172).
5. Radiation amplifying system (100) according to one of the preceding embodiments, wherein at least one correction branch (252) corrects for that at least along one deflection branch (176) the optical path length is too short.
6. Radiation amplifying system (100) according to one of the preceding embodiments, wherein the optical assembly (142) comprises at least one correction component (254) which defines at least one correction branch (252).
7. Radiation amplifying system (100) according to one of the preceding embodiments, wherein in at least one correction branch (252) a mismatch is at least partly corrected for by the optical path length of the at least one correction branch and/or by a correction unit, wherein in particular the at least one correction unit comprises at least one optical element which is arranged for achieving the desired correction.
8. Radiation amplifying system (100) according to any of the two previous embodiments, wherein the correction component (252) comprises at least one in particular adjustable deflection element (256, 260).
9. Radiation amplifying system (100) according to the previous embodiment, wherein with the at least one adjustable deflection element (260) an optical path length of the correction branch (252) is adjustable.
10. Radiation amplifying system (100) according to one of the preceding embodiments, wherein at least one correction branch (252) is adjusted with respect to the shape of the pumping radiation field (114) and/or with respect to an efficiency of the radiation amplifying system (100).
11. Radiation amplifying system (100) according to one of the preceding embodiments, wherein the radiation amplifying system (100) comprises at least one sensor for detecting at least one property of the to be amplified radiation field (112) and/or of the pumping radiation field (114) and/or of the optical assembly (142) and the detected values of the sensor are used to adjust at least one correction branch (252), in particular to adjust at least one adjustable deflection element (260) of the correction component (254).
12. Radiation amplifying system (100) according to one of the preceding embodiments, wherein the radiation amplifying system (100) comprises a controller which performs the adjustment, in particular performs the adjustment based on the detected values of the sensor.
13. Radiation amplifying system (100) according to one of the preceding embodiments, wherein at least one correction branch (252) is designed to at least reduce, in particular to at least approximately equalize, a mismatch to which the pumping radiation field (114) is exposed to when propagating along the optical path (144).
14. Radiation amplifying system (100) according to one of the preceding embodiments, wherein at least one correction branch (252) is designed to at least reduce, in particular to at least approximately equalize, a mismatch to which the pumping radiation field (114) is exposed to when propagating along the optical path (144) in the part of the optical assembly (142) which is with respect to a propagation direction of the pumping radiation field (114) before this at least one correction branch (252).
15. Radiation amplifying system (100) according to one of the preceding embodiments, wherein at least one correction branch (252) is designed to at least reduce, in particular to at least approximately equalize, a mismatch to which the pumping radiation field (114) is exposed to when propagating along the optical path (144) in the part of the optical assembly (142) which is with respect to a propagation direction of the pumping radiation field (114) after this at least one correction branch (252).
16. Radiation amplifying system (100) according to one of the preceding embodiments, wherein at least one correction branch (252) is spatially arranged on a side with respect to one of the at least two focusing units (152, 154) which is opposite to a side at which the laser active medium (124) is arranged.
17. Radiation amplifying system (100) according to one of the preceding embodiments, wherein at least one correction branch (252) is spatially arranged in the space between the two focusing units (152, 154).
18. Radiation amplifying system (100), in particular according to one of the preceding embodiments, comprising a laser active medium (124) for amplifying a to be amplified radiation field (112) and an optical assembly (142) which defines an optical path (144) for a pumping radiation field (114) with which the laser active medium (124) is optically pumped, wherein the optical path (144) comprises a plurality of branches (164, 176, 252) and wherein the optical assembly (142) comprises at least two focusing units (152, 154) and a deflection arrangement (172) wherein the laser active medium (124) is spatially arranged between the at least two focusing units (152, 154) and the focusing units (152, 154) define several pumping branches (164) of the optical path (144) for focusing the pumping radiation field (114) which propagates along the optical path (144) onto a pumping area (156) in the laser active medium (124) and wherein several deflection units (174) of the deflection arrangement (172) define respective deflection branches (176) of the optical path for connecting the several pumping branches (164) and wherein the pumping radiation field (114) is introduced to the optical system of the at least two focusing units (152, 154) and the deflection arrangement (156) with a deviation from a manner set by a focusing condition, in particular with a deviation from a collimated manner, wherein the deviation corresponds at least partly to a mismatch in the optical system of the at least two focusing units (152, 154) and the deflection arrangement (142) to a focusing condition.
19. Radiation amplifying system (100) according to one of the preceding embodiments, wherein at least one focusing unit (152, 154) is transparent at least for a pumping radiation field (114).
20. Radiation amplifying system (100) according to one of the preceding embodiments, wherein at least one focusing unit (152, 154) is reflective for at least the pumping radiation field (114).
21. Radiation amplifying system (100) according to one of the preceding embodiments, wherein at least several deflection units (174) of the deflection arrangement (156) are arranged spatially between the at least two focusing units (152, 154).
22. Radiation amplifying system (100) according to one of the preceding embodiments, wherein at least several deflection units (174) of the deflection arrangement (156) are arranged spatially on a side which is with respect to one focusing unit (152, 154) opposite to a side at which the laser active medium (124) is arranged.
23. Radiation amplifying system (100) according to one of the preceding embodiments, wherein each deflection unit (174) of at least several deflection units (174) of the deflection arrangement (156) is built by a respective single deflection element (222) which in particular transfers an incoming part of a deflection branch (176) to an outgoing part of the deflection branch (176).
24. Radiation amplifying system (100) according to one of the preceding embodiments, wherein each deflection unit (174) of at least several deflection units (174) of the deflection arrangement (156) is built by several deflection elements (222) wherein in particular an incoming part of a deflection branch (176) is deflected from one deflection element (222) to another deflection element of the same deflection unit (174) and one deflection element (222) of the deflection unit (174) provides an outgoing part of the deflection branch (176).
25. Radiation amplifying system (100) according to one of the preceding embodiments, wherein at least one deflection element (222) is part of several different deflection units (174).

Preferred features and for example advantages of the invention are provided by the following detailed description and in the drawings of several embodiments.

In the drawings:
- fig. 1: shows a schematic view of a radiation amplifying system comprising two focusing units, a deflection arrangement and a laser amplifying component;
- fig. 2: shows an enlarged view of a laser amplifying component;
- fig. 3: shows a partial view of pairs of deflection elements of the deflection arrangement and a reflective focusing unit;
- fig. 4: shows another view of the deflection elements of the deflection arrangement shown in fig. 3;
- fig. 5: shows a variant of an embodiment of a deflection arrangement;
- fig. 6: shows a sketch of a telescope like optics;
- fig. 7: shows an embodiment with transparent focusing units;
- fig. 8: shows a variant of a deflection element building several deflection units; and
- fig. 9: shows schematically an optical path for a pumping radiation field through an optical system of two focusing units and a deflection arrangement according to one embodiment.

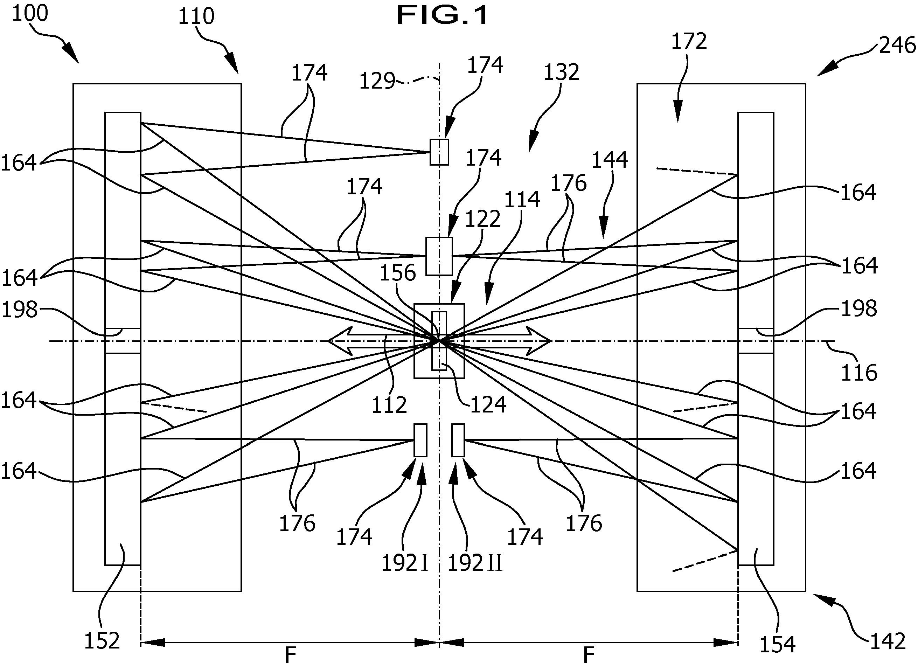

Embodiments of a radiation amplifying system which is designated in its entirety with 100 comprise an optical unit 110 for guiding and amplifying a to be amplified radiation field 112 and for guiding a pumping radiation field 114 and in which an optical axis 116 is defined, as exemplarily schematically shown in fig. 1.

In particular, the radiation amplifying system 100 comprises a source for the to be amplified radiation field 112 and a source for the pumping radiation field 114.

In particular, the optical unit 110 comprises a laser amplifying component 122 with a laser active medium 124 for amplifying the to be amplified radiation field 112 and which is optically pumped by the pumping radiation field 114.

In some variants a single part provides the laser active medium 124 and in other variants several parts provide the laser active medium 124.

Preferably, a part providing the laser active medium 124 is a thin laser disk.

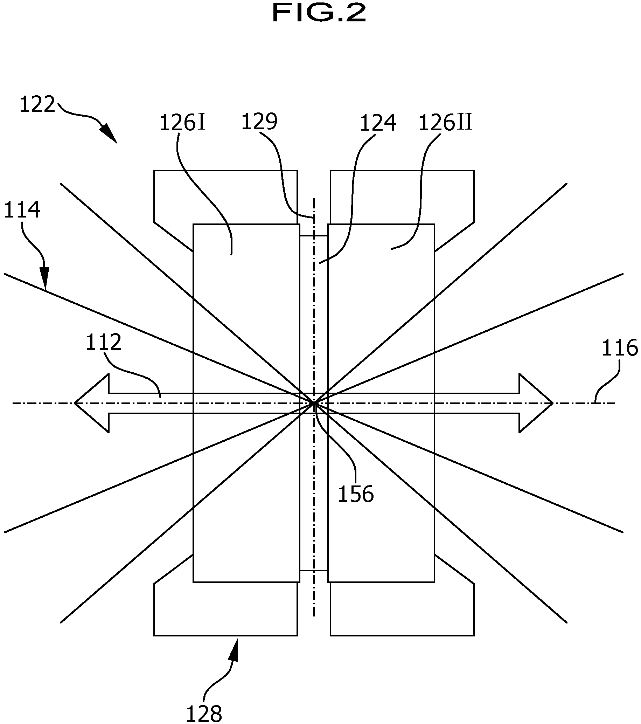

Advantageously, the laser active medium 124 is clamped between two bodies 126I and 126II, in particular to heat spreaders, which are aligned on a respective side of two opposing sides of the laser active medium 124 as exemplarily shown in fig. 2.

In particular, the heat spreaders 126 are built from a good thermal conductive material, for example the material at least comprises or is a diamond.

Preferably, the sides of the laser active medium 124 at which a respective body 126 is arranged and/or a respective side of the body 126 which is aligned at a side of the laser active medium 124 are, in particular slightly, convex shaped.

The bodies 126 are for example in direct contact with the laser active medium 124 or an anti-reflection layer is provided either on the respective body or the respective side of the laser active medium 124 and the other element is contacting this layer.

In particular, there is a clamping apparatus 128 which presses the bodies 126 at the respective side onto the laser active medium 124, in particular with an adaptable and settable force.

In particular, the laser active medium 124 defines a geometrical amplification plane 129 which in particular is arranged at least essentially perpendicular to the optical axis 116 of the optical unit 110.

For example, in case of a thin laser disk as the laser active medium 124, the thin laser disk extends essentially in the geometrical amplification plane 129 and the thickness of the laser disk which is measured perpendicular to the geometrical amplification plane 129 is much smaller, for example at least ten times smaller, than the extension of the laser disk within the geometrical amplification plane 129.

In particular, the sides of the laser active medium 124 at which the bodies 126 are arranged are opposing each other with respect to the geometrical amplification plane 129.

Advantageously the laser active component 122 with the laser active medium 124 which is preferably clamped between the bodies 126I, 126II for example by the clamping apparatus 128 has one or several features as described in EP 3 209 913 A1 and/or EP 3 209 914 A1. According to these references, advantageous embodiments comprise a there called amplifying unit onto which at least one there called optical device is pressed in particular with a there called mounting system and preferably at least one of the optical devices is part of a heat dissipation system. Regarding advantageous features it is fully referred to these references.

In particular, the optical unit 110 comprises an optical device 132 which defines an optical passage way for the to be amplified radiation field and in operation the to be amplified radiation field propagates along this optical passage way.

The optical passage way passes, preferably at least approximately perpendicular to the geometrical amplification plane 129, through the laser active medium 124 and in particular through the bodies 126 between which the laser active medium 124 is clamped and thus the laser active medium 124 is used with regard to the to be amplified radiation field in transmission.

In particular, at least in the region around the laser amplifying component 122 the optical passage way is aligned along the optical axis 116 of the optical unit 110 and thus in operation the to be amplified radiation field 112 propagates at least in this region on the optical axis 116.

The optical unit 110 comprises an optical assembly 142 of optical elements which defines an optical path 144 for the pumping radiation field 114 and in operation the pumping radiation field 114 propagates along the optical path 144.

The optical assembly 142 comprises two focusing units 152, 154 for focusing the pumping radiation field 114 which propagates along the optical path 144 on a pumping area 156 in the laser active medium 124 and the optical passage way of the to be amplified radiation field 112 passes through the pumping area 156.

The laser amplifying component 122 is spatially arranged between the two focusing units 152, 154.

In particular, the two focusing units 152, 154 are arranged opposite to each other with respect to the geometrical amplification plane 129.

In particular, the optical axis 116 is defined by the two focusing units 152, 154 and for example by their arrangement with respect to each other.

The laser active medium 124 and the focusing units 152, 154 are arranged, in particular on the optical axis 116, in a distance to each other such that the respective focal points of the two focusing units 152, 154, which lie at least essentially upon each other, are within the pumping area 156 and accordingly each focusing unit 152, 154 is arranged in a distance to the laser active medium 124, in particular in a distance to the geometrical amplification plane 129, which is at least essentially its focal length F.

Preferably, the two focusing units 152, 154 have at least essentially the same focal length F.

Between the two focusing units 152, 154 a plurality of pumping branches 164 are defined which extend from one of the two focusing units 152, 154 to the other of the two focusing units 154, 152 and pass through the pumping area 156 in the laser active medium 124 and in particular through the focal points of the focusing units 152, 154.

In some variants there is a single pumping spot in the pumping area 156 and each pumping branch 164 runs through the single pumping spot.

In other variants, there are several pumping spots, for example an array of pumping spots, in the pumping area 156 and each pumping branch 164 runs through a respective pumping spot.

Furthermore, the optical assembly 142 comprises a deflection arrangement 172 of several deflection units 174 which define a plurality of deflection branches 176 of the optical path 144.

In particular, the deflection units 174 are designed to transfer an incoming part 184 of a respective deflection branch 176 into an outgoing part 188. In particular, the pumping radiation field 114 propagates along the outgoing part 188 at least essentially in an opposite direction than along the incoming part 184 and the incoming part 184 and the outgoing part 188 are offset to each other in a direction which is at least essentially perpendicular to the propagation direction of the pumping radiation field 114.

Each of at least most of the deflection branches 176, for example every deflection branch 176, connects two pumping branches 164.

In particular, a respective pumping branch 164 coming to one of the focusing units 152, 154 is transferred by the focusing unit 152, 154 at a respective transfer region into a deflection branch 176, in particular to the incoming part 184 of the deflection branch 176 and an outgoing part 188 of a deflection branch 176 coming from the deflection unit 174 extends to one of the focusing units 152, 154, in particular to the focusing unit 152, 154 from which the ingoing part 184 is coming, and at a respective transfer region of the focusing unit 152, 154 the deflection branch 176 is transferred to another pumping branch 164.

Preferably, transfer regions at which a pumping branch 164 is transferred to a deflection branch 176 or a deflection branch 176 is transferred to a pumping branch 164 at the focusing units 152, 154 are arranged in a radial distance to the optical axis 116 and in particular are arranged at a respective focusing unit 152, 154 subsequently in a circumferential direction around the optical axis 116.

Exemplarily, some pumping branches 164 and deflection branches 176 connecting these pumping branches 164 are schematically shown in fig. 1.

In some embodiments there is one set 1921 of deflection units 174 which are associated with one of the two focusing units, here for example with the focusing unit 152, and another set 192II of deflection units 174 which are associated with the other focusing unit, here for example with the focusing unit 154, as exemplarily shown in fig. 1.

In other embodiments there are at least most of the deflection units 174 associated with both focusing units 152, 154, and for example the separately shown deflection units 174 in fig. 1 of the two sets 1921 and 192II are in such embodiments the same deflection units 174.

A deflection unit 174 which is associated with one of the two focusing units 152, 154 defines a deflection branch 176 which connects at the associated focusing unit 152, 154 two pumping branches.

In particular, the focusing units 152, 154 have an in particular material-free corridor 198 at which the optical passage way for the to be amplified radiation field 112 passes through such that the propagation of the to be amplified radiation field 112 is not disturbed by the focusing units 152, 154.

In particular, the optical axis 116 runs through the corridor 198.

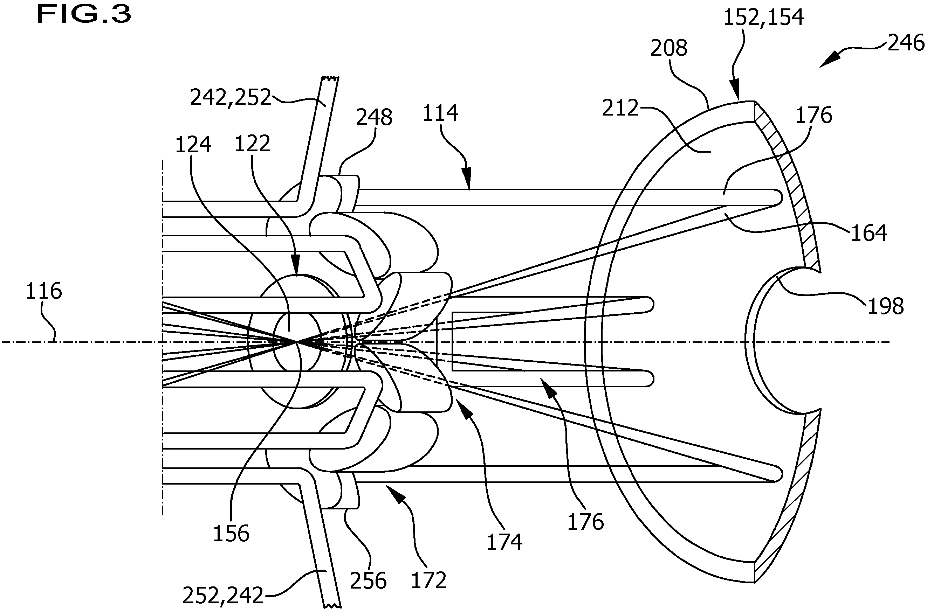

In some embodiments, as exemplarily shown in fig. 3 in a variant, at least one focusing unit 152, 154, in particular both focusing units 152, 154 is/are a reflective unit.

At a respective transfer region of the reflective focusing unit 152, 154, the pumping radiation field 114 which propagates along the optical path 144 is reflected and thereby a pumping branch 164 is transferred to a deflection branch 176 and/or a deflection branch 176 is transferred to a pumping branch 164.

In some variants, the reflective focusing unit 152, 154 is built by a single focusing element 208.

In particular, the single focusing element 208 provides the several transfer regions.

For example, the single focusing element 208 has a breakthrough which provides the corridor 198 for the optical passage way.

In some variants, the reflective focusing unit 152, 154 is built by a plurality of focusing elements.

In particular, each focusing element of the plurality of focusing elements provides at least one transfer region.

For example, at least several focusing elements of the plurality of focusing elements are arranged in a circumferential direction around the optical axis 116 and/or around the corridor 198 for the optical passage way.

In particular, the single focusing element or each of at least several focusing elements of the plurality of focusing elements of the reflective focusing unit 152, 154 has a reflective surface 212, preferably a curved reflective surface.

The reflective surface 212 is shaped such that the in particular along a deflection branch incident pumping radiation field 114 is reflected by the reflective surface 212 into a pumping branch 164 and focused on the pumping area 156 and that the pumping radiation field 114 which comes from the pumping area 156 along a pumping branch 164 and is incident on the reflective surface 212 is reflected by the reflective surface 212 and transferred to a respective deflection branch 176.

Preferably, the reflective focusing unit 152, 154 comprises at least one mirror, in particular a parabolic shaped mirror, as a focusing element.

Preferably the deflection arrangement 172 is arranged in such embodiments spatially between the two focusing units 152, 154, in particular spatially in the middle between the two focusing units 152, 154 such that the deflection units 174 of the deflection arrangement 172 have from both focusing units 152, 154 at least essentially the same distance with the distance being in particular measured along the axial direction of the optical axis 116.

In particular, the deflection arrangement 172 is arranged at an axial position along the optical axis 116 at which at least approximately also the laser amplifying component 122 with the laser active medium 124 is positioned.

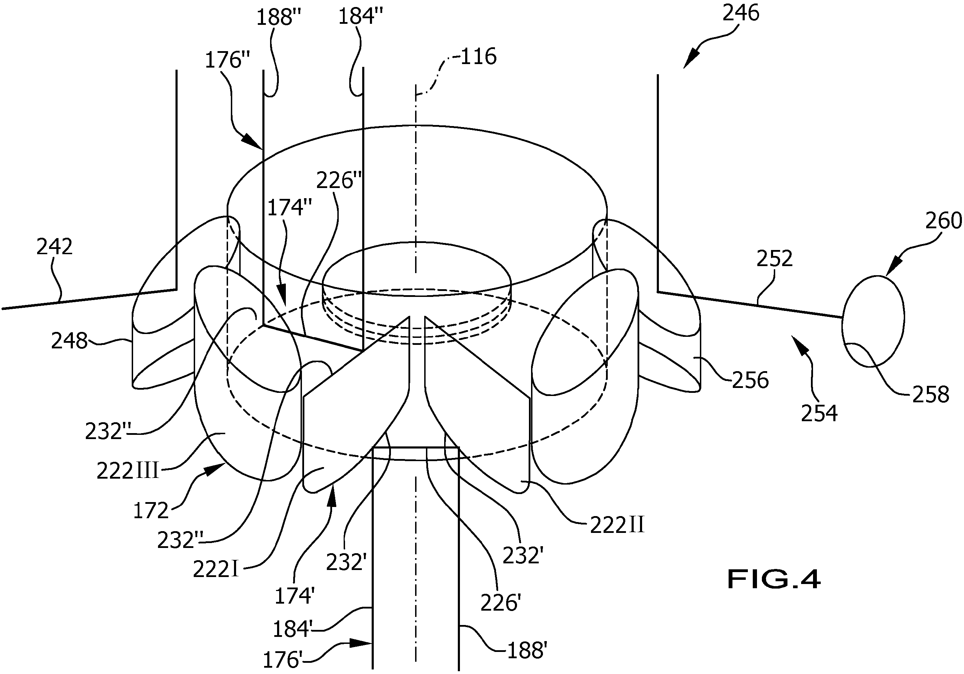

In some preferred variants of the embodiment the deflection arrangement 172 comprises several deflection elements 222 which build the deflection units 174 and are in particular associated with both focusing units 152, 154, as exemplarily shown in figs. 3 and 4.

Preferably, respective pairs of deflection elements 222 build each a deflection unit 174.

In these variants, an incoming part 184 of a respective deflection branch 176 which comes from one of the two focusing units 152, 154 reaches one deflection element 222 of a deflection unit 174 from which the pumping radiation field 114 propagating along this branch 176 is deflected to an intermediate part 226 of the deflection branch 176 towards another deflection element 222 of the deflection unit 174 and at another deflection element 222 of the deflection unit 174 the pumping radiation field 114 is deflected to an outgoing part 188 of the deflection branch 176 which extends to the one of the two focusing units 152, 154.

Preferably, the incoming part 226 and the outgoing part 228 run at least essentially parallel to each other and in particular at least essentially parallel to the optical axis 116.

For example, the intermediate part 226 extends between the two deflection elements 222 of a pair of deflection elements 222.

In particular, each deflection element 222 has at least one reflective surface 232 at which the pumping radiation field 114 is reflected and the respective part 184, 226 of the deflection branch 176 is transferred to a respective part 226, 188.

Preferably, each deflection element 222 is part of two different deflection units 174', 174" for two different deflection branches 176', 176" where in particular one of the two different deflection units 174', 174" is associated to one of the focusing units 152, 154 and the other of the two different deflection units 174', 174" is associated with the other of the two focusing units 152, 154.

Preferably, each deflection element 222 has two reflective surfaces 232' and 232" which in particular are arranged on opposing sides of the deflection element 222 and each reflective surface 232', 232" belongs to a different of two deflection units 174', 174" and in particular one of the two deflection units 174', 174" is associated with one of the two focusing units 152, 154 and the other of the two deflection units 174', 174" associated to the other of the two focusing units 154, 152.

Preferably, each of the two reflective surfaces 232', 232" is facing towards the one of the two focusing units 152, 154 to which the deflection unit 174 to which the respective reflective surface 232', 232" belongs to is associated to.

In particular, a deflection element 2221 faces with its one reflective surface 232' of two reflective surfaces 232 to a reflective surface 232' of another deflection element 222II which together build a deflection unit 174' for one deflection branch 176' and with the other reflective surface 232" of the two reflective surfaces 232 this deflection element 2221 faces towards a reflective surface 232" of yet another deflection element 222III together with which it forms another deflection unit 174" for a deflection branch 176".

In particular, the deflection elements 222 are arranged at a same radial distance to the optical axis 116 and subsequently in a circumferential direction around the optical axis 116.

Advantageously, each of at least most of the deflection elements 222 build with each of the two deflection elements 222 which are arranged with respect to the circumferential direction of the optical axis 116 adjacent to it on opposite sides a respective deflection unit 174.

Preferably, the reflective surfaces 232 are flat surfaces and are arranged in an angle to the optical axis 116.

In particular, the reflective surfaces 232 are arranged under an angle of at least approximately 45° to the optical axis such that an incoming part 184 which runs at least approximately parallel to the optical axis 116 is transferred to an intermediate part 226 which runs at least approximately in a perpendicular direction with respect to the axial direction of the optical axis 116 and/or an intermediate part 226 which runs at least approximately in a perpendicular direction with respect to the axial direction of the optical axis 116 is transferred to an outgoing part 188 which runs at least approximately parallel to the axial direction of the optical axis 116.

Furthermore, the optical assembly 142 defines an introducing branch 242 of the optical path 144 along which the pumping radiation field 114 propagating along the optical path 144 is introduced into the optical system 246 comprising the deflection arrangement 172 and the focusing units 152 and 154.

In particular, the introducing branch 242 extends to one of the focusing units 152, 154 and is transferred there preferably into a pumping branch 164 and from there on the pumping radiation field 114 propagates along the plurality of pumping branches 164 and deflection branches 176 of the optical path 144 as described above.

A variant of an introducing branch 242 comprising a deflection element 248 is shown exemplarily in figs. 3 and 4, in which the introducing branch 242 extends to the deflection element 248 and from there to one of the focusing units 152, 154.

For efficient pumping of the pumping area, the width of the pumping radiation field 114 along the optical path 144 should not widen too much, preferably the width should remain at least along corresponding branches, at least approximately the same.

Preferably, along the several deflection branches 176 the width of the pumping branches should be at least approximately the same and/or the pumping radiation field 114 should be at least essentially collimated.

In particular, along the several pumping branches 164 the pumping radiation field 114 should pass through the pumping area 156 with the at least approximately same width and/or the pumping radiation field 114 should be focused on the pumping area 156.

The width of the pumping radiation field 114 is taken at least essentially perpendicular to the propagation direction of the pumping radiation field 114.

One focusing condition or several focusing conditions should be fulfilled by the optical system 246 of the two focusing units 152, 154 and the deflection arrangement 172.

In particular, one focusing condition is that the respective focal point of each of the focusing units 152, 154 is located within the pumping area 156. Advantageously, therewith the pumping radiation field is focused onto the single pumping spot or the several pumping spots.

Accordingly, due to this focusing condition, which typically is fulfilled, thus the requirement that each of the focusing units 152, 154 is distanced to the pumping area 156 by the respective focal length F.

Advantageously, therewith the pumping radiation field is focused to the pumping area 156 and an efficient pumping is realized.

In particular, the optical system of the two focusing units 152, 154 and the deflection arrangement 172 is built like a telescope like optics.

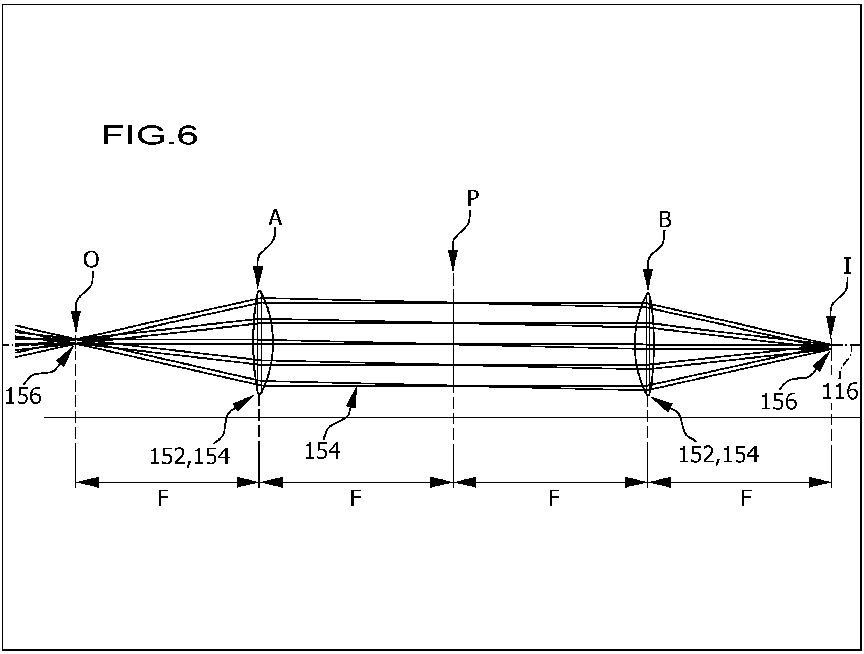

A telescope like optics is sketched exemplarily in fig. 6.

In a telescope like optics an object O is imaged through a first focusing optics A and a second focusing optics B onto an image I.

In particular, the object O and the focusing optics A, B and the image I are arranged along the optical axis 116 of this optics.

The object O is positioned in the focal plane of the first focusing optics A and is therefore distanced from the first focusing optics A by the focal length F of this first focusing optics A. The image I is produced in the focal plane of the second focusing optics B and is therefore distanced to the second focusing optics B by the focal length F of the second focusing optics B.

For a very small object O which is positioned at least essentially at the focal point of the first focusing optics A, the radiation field which images the object O onto its image I is approximately collimated between the two focusing optics A and B.

However, due to the finite spatial extension of the object O not all rays of the radiation field steeming from the object O come exactly from the focal point of the focusing optics A since the focal point is only an idealized mathematical point without spatial extension. Therefore, the different rays of the radiation field are not perfectly parallel to each other between the two focusing optics A and B.

In particular, in a plane P the different light cones coming from different spatial positions of the object O are crossing each other.

In particular, corresponding rays from different spatial positions of the object O cross each other in a plane P. For example, corresponding rays are the outermost rays of different light cones from different spatial positions of the object O.

In particular, the plane P runs perpendicular to the optical axis 116 and is distanced to the focusing optics A and B by the respective focal length F.

In particular, the information in the radiation field at the plane P corresponds to the Fourier transformation of the object O. Therefore the plane P is also called the Fourier plane.

Because the different light cones cross each other at the plane P, there the diameter of the radiation beam is the smallest. Upon further propagation of the radiation beam away from the plane P the diameter of the radiation beam widens. At the distance corresponding to the focal length F behind the Fourier plane P the diameter of the radiation beam equals the size of the diameter at the focusing optics A, B from which this beam is coming. Therefore, in order to avoid a widening of the radiation beam the other focusing optics B, A is advantageously positioned two times the focal length F away from the focusing optics A, B, from which the radiation beam is coming.

To summarize, preferably the object O is positioned the focal length F away from the focusing optics A and the image I is produced the focal length F away from the second focusing optics B and the focusing optics A and B are distanced to each other by two times the focal length F such that in total the image I is distanced to the object O by four times the focal length F. Therefore, this focusing condition is also called the 4F-condition.

In particular, in the embodiment a telescope like optics is realized by the mapping of the pumping area 156 onto itself by the pumping radiation field 114 which propagates from the pumping area 156 to one of the two focusing units 152, 154 and further to the deflection units 174 associated with this one focusing unit 152, 154 and from there back to the one focusing unit 152, 154 to be focused back onto the pumping area 156 such that the image of the pumping area 156 is produced again at the pumping area 156.

Accordingly, to fulfill the 4F-condition the deflection units 174 have to be arranged such that the optical path length between the two focusing units 152, 154 is two times their focal length F.

In particular, the optics for mapping the one set 192 of deflection units 174 associated with one of the two focusing units 152, 154 onto the other set 192 of deflection units 174 associated with the other of the two focusing units 154, 152 by the two focusing units 152, 154 can be seen as a telescope like optics for which the 4F-condition has to be fulfilled, too.

However, due to mismatches in real systems focusing conditions can not entirely fulfilled and mismatches occur.

For example, there are spatial constrains for the positioning of the deflection units 174 such that at least one focusing condition, in particular the 4F-condition, cannot be fulfilled.

In particular, the deflection unit 174 and in particular their deflection elements 222 have a finite extension and are arranged between the two focusing units 152, 154. But the two focusing units 152, 154 have to be distanced to each other by the sum of their respective focal length F and therefore in between the two focusing units 152, 154, there is not the space that the deflection units 174 can be positioned in a distance to each of the two focusing units 152, 154 by the respective focal length F and accordingly in particular the 4F-condition cannot be fulfilled.

For example, a finite and optically effective thickness of optical elements in the focusing units 152, 154 shortens the optical path length. This may occur in curved, for example strongly curved, parabolic reflectors. In particular, a shortening of the optical path length occurs in cases in which the radiation field hits the parabolic reflector offset, for example strongly offset, the optical axis of the parabolic reflector. In particular, a shortening of the optical path length occurs if the axis of the radiation field and the axis of the parabolic reflector are offset, for example strongly offset.

In particular, within a real optical system 246 with real focusing units 152, 154 and real deflection elements 174 deviations from the idealistic behavior occur and corresponding mismatches to the focusing conditions occur.

In particular, there are mismatches to the focusing conditions due to the finite width of the pumping radiation field 114 such that the focusing condition cannot be fulfilled along the entire cross section of the pumping radiation field 114 which is taken perpendicular to the propagation direction because, for example, the focal point is an idealistic point without extension and/or due to the finite width of the pumping radiation field 114 a transfer region at the focusing unit has a finite width and therefore the focusing condition cannot for all rays of the pumping radiation field 114 be fully fulfilled.

For example, a mismatch occurs due to a finite penetration length at a reflection along the optical path in the optical system 246.

In particular due to mismatches in real systems, for example as described above, the length of the part of the deflection branch 176 which extends from one focusing unit 152, 154 to the deflection unit 174 should be indeed larger than the focal length F but in fact this distance is smaller than the focal length F, because the deflection unit 174 should be positioned at least essentially in the middle between the two focusing units 152, 154 but not the entire separation between the two focusing units 152, 154 is available for the propagation of the pumping radiation field 114 because of the finite extension of the deflection unit 174 and in particular the finite extension of their deflection elements 222.

Therefore, a correction branch 252 of the optical path 144 is defined by the optical assembly 142 which corrects for mismatches to the at least one focusing condition which occur in the deflection branches 176 and/or pumping branches 164 for and/or after the correction branch 252 with respect to the propagating direction of the pumping radiation field 114 along the optical path 144.

In particular, a mismatch to the at least one focusing condition in the pumping radiation field 114 is at least reduced while the pumping radiation field 114 propagates along the correction branch 252.

In some advantageous variants of the embodiments the mismatch to the focusing condition in the pumping radiation field 114 is at least essentially compensated when the pumping radiation field 114 has propagated through the correction branch 252.

In other variants of the embodiment the mismatch to the focusing condition in the pumping radiation field 114 is overcompensated while the pumping radiation field 114 propagates along the correction branch 252.

In particular, the pumping radiation field 114 is modified during the propagation through the correction branch 252 such that the focusing condition is at least essentially met but then the pumping radiation field 114 is further modified in the same manner and therefore leaves the correction branch 252 with a mismatch to the focusing condition but in a converse manner compared with the mismatch it had when entering the correction branch 252. Therefore, if the pumping radiation field 114 propagates further along the optical path 144 this mismatch in the converted manner is compensated by the mismatch in the subsequent pumping branches 164 and/or deflection branches 176 such that later on along the optical path 144 the pumping radiation field 114 at least essentially fulfills the focusing condition.

In preferred variants in the introducing branch 242 a correction for a mismatch in the optical path lengths of the subsequent branches 164, 176 is implemented and therefore preferably the introducing branch 242 is a correction branch 252, too.

Preferably, the optical assembly 142 comprises a correction component 254 in which one correction branch 252 is defined.

For example, the correction component 254 comprises a deflection element 256 for deflecting an incoming part of the correction branch 252 into an extension part, which provides for an extension of the optical path length to correct the mismatch in the optical system 246 to the focusing condition.

In particular, the deflection element 256 of the correction component 254 has a reflective surface for reflecting the incoming pumping radiation field 114 towards the extension part of the correction branch 252.

Preferably, the deflection element 256 of the correction component 254 is arranged at least approximately at the same axial position with respect to the optical axis 116 like the deflection units 174 of the deflection arrangement 172 and is positioned in the circumferential arrangement around the optical axis 116 together with the deflection units 174.

In particular, the correction component 254 comprises a reverse element 258, for example a mirror, for reversing the direction of propagation of the pumping radiation field in the correction component 254, such that the pumping radiation field propagates along the correction branch 252 at first in one direction and after being reversed by the reverse element 258 in the opposite direction

For example, the reverse element 258 is provided subsequent to the deflection element 256, such that the pumping radiation field propagates in the correction branch 252 first, in particular along the incoming part, to the deflection element 256 and then, in particular along the extension part, further to the reverse element 258 and from there back to the deflection element 256 and then further along the incoming part which is therefore also an outgoing part of the correction branch 252.

In some preferred embodiments, a correction for a mismatch is achieved in at least one correction branch at least partly by a correction unit in addition to and/or in the alternative to the correction provided by the additional optical path length provided by the correction branch. In particular, the correction unit is an optical unit of several optical elements and these elements are arranged for the desired correction.

For example, the correction unit comprises a telescope like optics. In particular, this telescope like optics is arranged to have a misadjustment wherein the misadjustment is designed to correct for the mismatch.

In preferred variants a mismatch to at least one focusing condition in the pumping radiation field 114 is at least reduced and/or at least essentially compensated and/or overcompensated by the correction unit. This is at least similar to the variant in which the correction is achieved by the additional optical path length of the correction branch 252. In particular, a correction branch with a correction unit is at least partly similarly built like a correction branch 252 in which a mismatch is corrected for by the defined optical path length of the correction branch 252. Therefore, for further details it is fully referred to the description above and hereafter in order to avoid repetitions.

A correction for a mismatch is at least partly provided by correction unit also in some preferred variants of further embodiments described below.

Advantageously, the correction component 254 comprises an adjustable correction element 260 with which the correction behavior of the correction component 254 is adjustable in particular by a controller and/or by a user of the radiation amplifying system 100 adjustable.

For example, in some variants the correction element 260 influences the shape of the pumping radiation field, in particular focuses and/or collimates the pumping radiation field, preferably in an adjustable manner.

For example, the correction element 260 comprises a curved surface, preferably with an adjustable curvature.

For example, in some variants the correction element comprises one lens or several lenses, preferably with an adjustable focusing behavior, for example a distance between the lenses is adjustable.

In some preferred variants of the embodiment with an in particular adjustable correction element 260 the optical path length of the correction branch 252 is adjustable.

For example, the correction element 260 comprises a mirror, the position of which is adjustable within the correction component 254 in the direction of propagation of the pumping radiation field 114.

In particular, the distance from the correction element 260 to the deflection element 256 of the correction component 254 is adjustable.

For example, the reverse element 258 is the adjustable correction element 260 such that the length of the extension part is adjustable.

In preferred variants, the optical assembly 142 is for example during its installation calibrated and in particular the at least one correction branch 252 is adjusted in its length such that the mismatch in at least one focusing condition is corrected for. Then the elements of the calibrated optical assembly 142, in particular with the adjusted at least one correction branch 252, are fixed. Therefore, during operation of the radiation amplifying system 100 advantageously no, for example elaborated adjustment is necessary.

In some advantageous variants, the radiation amplifying system 100 comprises an adjustment unit in particular with a sensor and a controller for adjusting the adjustable correction element 260.

In particular, with a sensor the value of at least one property of the to be amplified radiation field 112 and/or of the pumping radiation field 114 is measured and the controller evaluates the at least one detected value und initiates an adjustment of the adjustable correction element 260 based on the detected value.

Preferably, the adjustment of the adjustable correction element 260 is based on at least one property, in particular on the output power of the to be amplified radiation field 112 and/or on the energy introduced by the pumping radiation field 114 to the pumping area 156 and/or on a shape of the pumping radiation field 114, in particular its width and/or a spreading of the rays of the pumping radiation field 114, and the sensor detects at least one parameter associated directly or indirectly with the corresponding property.

In some variants of the embodiment in addition or in the alternative, a deflecting correction element is provided in at least one of the deflection branches 176 in order to extend the optical path length of the deflection branch 176 in order to correct for a mismatch to a focusing condition. For example, the deflecting correction element comprises one prism or several prism and/or one mirror or several mirrors.

In particularly advantageous variants of the embodiment the deflection arrangement 172 comprises a shifting unit for the pumping radiation field 114 in which an incoming branch of the optical path 144 is transferred in an outgoing branch along which the pumping radiation field 114 propagates in the opposite direction as the direction along the incoming branch and the outgoing branch is slightly shifted with respect to the incoming branch in a direction at least essentially perpendicular to the propagation direction. Therewith, the pumping radiation field 114 can propagate through the deflection arrangement 172 twice, namely along corresponding branches which are slightly shifted perpendicular to the propagation direction.

In particular, preferred designs and preferred features and for example advantages of embodiments of the invention are briefly as follows:
The radiation amplifying system 100 comprises a laser amplifying component 122 for amplifying the to be amplified radiation field 112.
The radiation amplifying system 100 comprises an optical assembly 142 defining an optical path 144 for the pumping radiation field 114 with the optical path 144 comprising a plurality of pumping branches 164 which pass through a pumping area 156 in the laser active medium 124 of the laser amplifying component 122 such that advantageously the pumping radiation field 114 efficiently pumps the laser active medium 124.

The optical assembly 142 comprises two focusing units 152, 154 for focusing the pumping radiation field 114 onto the pumping area 156 as the pumping radiation field 114 propagates along a respective pumping branch 164.

Furthermore, the optical assembly 142 comprises the deflection arrangement 172 with deflection units 174 by which along a respective deflection branch of several deflection branches 176 two respective pumping branches 164 are connected and the pumping radiation field 114 is guided from one pumping branch 164 along the deflection branch 176 to another pumping branch 164.

Within the optical system 246 of the deflection arrangement 172 and the focusing unit 152, 154 at least one focusing condition has to be fulfilled, for example that the focusing units 152, 154 are distanced to each other with the sum of their respective focal lengths F and/or that the deflection units 174 are in the proper distance to the respective focusing unit 152, 154 for proper imaging of the pumping radiation field 114.

In particular, if the focusing condition is fulfilled, a widening of the pumping radiation field 114 when propagating along the optical path 144 is at least essentially suppressed.

Because due to spatial constraints and/or due to optical aberrations and/or due to further discrepancies in the real optical system 246 from an idealistic system there are mismatches to the focusing condition in particular mismatches in the optical path length.

In order to correct one or several mismatches in the at least one focusing condition the optical assembly 142 comprises at least one correction component 254 which defines a correction branch 252.

In particular, the optical path length of the correction branch 252 and/or a correction unit in the correction branche 252 is designed to at least reduce the mismatch in the focusing condition and/or essentially eliminates the mismatch and/or overcompensates the mismatch.

Preferably, the correction component 254 comprises the in particular adjustable correction element 256 with which in particular the optical path length of the correction branch 252 and/or a setting of the correction unit is adjustable for correcting for the mismatch and/or with which for example a shape of the pumping radiation field can be influenced for correcting for a mismatch.

For example, the radiation amplifying system 100 comprises a controller which initiates and/or controls the adjustment of the correction element 260 and preferably the system 100 comprises a sensor for detecting the value of at least one parameter and the adjustment of the correction element 260 is based on the detected parameter value.

In particular, the deflection units 174 of the deflection arrangement 172 are spatially fixed arranged to each other and for example spatially fixed with respect to the laser amplifying component 122 and in particular spatially fixed with respect to the focusing unit 152 and 154.

Preferably, the adjustable correction element 260, which in its position is adjustable, is spatially adjustable with respect to the deflection units 174 of the deflection arrangement 172 and in particular spatially adjustable in its position relative to the focusing unit 152 and 154 and for example spatially adjustable in its position with respect to the laser component 124.

Accordingly, advantageously the mounting of the optical assembly 142 and for example a set-up thereof can be simplified because it is sufficient to arrange the several deflection units 174 in a proper arrangement for defining deflection branches 176 which connect pumping branches 164 and in particular the deflection units 174 can be fixed in this arrangement and potentially occurring mismatches to the focusing condition are corrected for by the at least one correction branch 252 defined by the correction component 254. In particular, therewith an extensive fine-tuning of the arrangement of the several deflection units 174 can be avoided.

For example, therewith the optical assembly 142 and for example the deflection arrangement 172 can be designed in a more compact manner.

Advantageously, with the adjustable correction element 260 the adjustment of the correction branch and therefore the correction of a mismatch are even more simplified.

In particular, with the adjustable correction element 260 even during the operation of the radiation amplifying system 100 an adjustment in particular on demand of a user can be performed.

Preferably, with the at least one sensor a property of the radiation amplifying system 100, in particular of the pumping radiation field 114 and/or of the to be amplified radiation field 112 and/or for example of the optical assembly 142, for example of the correction component 254, is measured and advantageously the adjustment is based on the detected parameter value.

Preferably, the adjustment of the correction component 254, in particular of the adjustable correction element 260, is performed by a controller in particular based on the at least one detected parameter value of the sensor.

In particular, even large numbers of pumping branches 164 are efficiently possible in the optical assembly 142 because potential and in particular unavoidable mismatches to the focusing condition which would sum up during the propagation of the pumping radiation field along the large number of pumping branches and would reduce the pumping efficiency can be corrected for by the at least one correction branch 252.

In connection with the description of other embodiments those features and/or elements and/or parts which are designed at least essentially the same and/or at least fulfill the at least basically same function as in another embodiment the same reference sign is used and in so far as no further details regarding these are provided in connection with one of these embodiments it is fully referred regarding further details and/or advantageous features to the description of the other embodiments, in particular to the ahead described embodiment and/or to one of the below described embodiments.

In particular, is with respect to a feature and/or element and/or part a specific design to be emphasized a respective letter designating the respective embodiment is appended to the reference sign as a suffix.

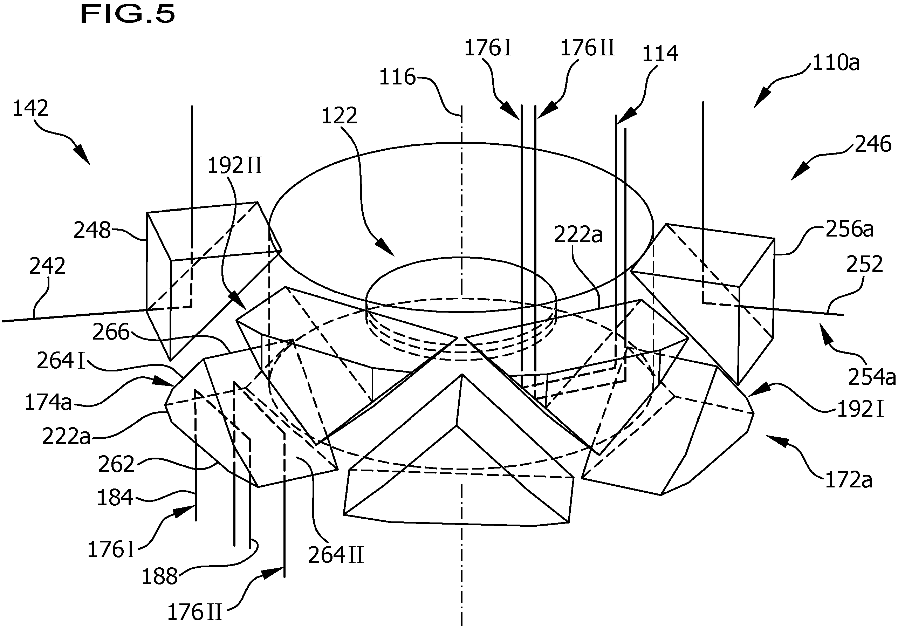

In an embodiment of a radiation field amplifying system 100a the optical assembly 142 for the pumping radiation field 114 comprises a deflection arrangement 172a with deflection units 174a which are built by one deflection element 222a as exemplarily shown in fig. 5.

In particular, the deflection elements 222a are designed as prisms.

In particular, an incoming part 184 of a respective deflection branch 176 is deflected by the deflection element 222a to an outgoing part 188.

For example, the prism building the deflection element 222a has a base surface 262 at which the incoming part 184 enters into the deflection element 222a and the incoming part 184 is deflected internally in the deflection element 222a into the outgoing part 188 which exits the deflection element 222a in particular at the base surface 262.

In particular, the prism is a triangular prism with two side surfaces 2641 and 264II which extend from a respective end of the base surface 262 to a tip 266 of the prism at which the two side surfaces 2641 and 264II meet each other in an angled manner. In particular, the pumping radiation field 114 entering the prism at the base surface 262 is reflected at the side surfaces 264 such that it exits the prism at the base surface 262 again along the outgoing part 188.

For example, there is one set 192I of deflection elements 222a associated with one of the two focusing units 152, 154 and another set 192II of deflection elements 222a associated with the other of the two focusing units 152, 154.

Preferably, the deflection units 174a are arranged at least approximately in the middle between the two focusing units 152, 154 in particular as described above.

Preferably, the deflection elements 222a are arranged subsequently in a circumferential direction around the optical axis 116 and for example the deflection element 222a of the two sets 192I and 192II associated with one respective of the two focusing units 152, 154 are arranged alternating next to each other.

In particular, the respective base surface 262 of the deflection elements 222a faces towards the focusing unit 152, 154 to which the deflection element 222a is associated to.

Advantageously, a deflection element 222a is arranged with its extension from its base surface 262 to its tip 266 in a space between two deflection elements 222a associated with the other focusing unit with this space in particular being bounded by respective angled side surfaces 264 of these other deflection elements 222a.

In fig. 5, there are shown exemplarily for two deflection units 174a two deflection branches 176I and 176II which are shifted with respect to each other as described above for duplicating the passage of the pumping radiation field 114 through the optical system 246.

The deflection arrangement 172a of this embodiment comprises a correction component 254a defining a correction branch 252 for correcting a mismatch in at least one focusing condition in particular at least basically as described above.

In particular, the correction component 254a comprises a deflection element 256a which is for example a prism.

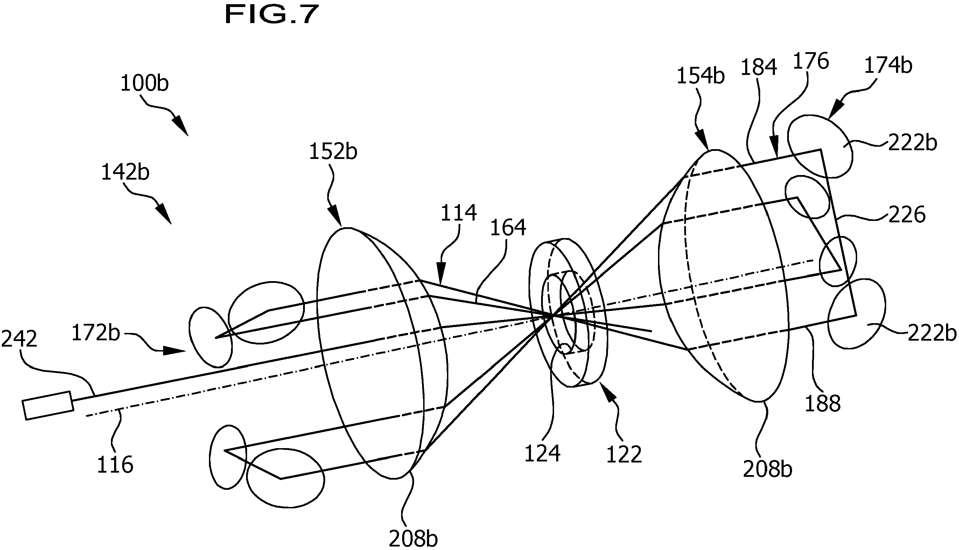

In embodiments of a radiation amplifying system 100b at least one focusing unit, for example both focusing units 152b and 154b, are transparent for the pumping radiation field 114, as exemplarily shown in fig. 7.

In some variants, the transparent focusing unit 152b, 154b is built by a single focusing element 208b.

In particular, the single focusing element 208b provides the several transfer regions.

For example, the single focusing element 208b has a breakthrough which provides the corridor 198 for the optical passage way.

In some variants, the reflective focusing unit 152b, 154b is built by a plurality of focusing elements.

In particular, each focusing element of the plurality of focusing elements provides at least one transfer region.

For example, at least several focusing elements of the plurality of focusing elements are arranged in a circumferential direction around the optical axis 116 and/or around the corridor 198 for the optical passage way.

For example, the transparent focusing unit 152b, 154b comprises at least one lens as a focusing unit.

In particular, a laser amplifying component 122 with the laser active medium 124 is positioned with respect to the axial direction of the optical axis 116 between the two focusing units 152b and 154b and preferably at the respective focal point of the two focusing units 152b, 154b.

Several pumping branches 164 of the optical path 144 for the pumping radiation field 114 extend between the two focusing units 152b and 154b and run through a pumping area 156 in the laser active medium 124 and in particular through the respective focal point of the two focusing units 152b and 154b.

At the transparent focusing unit 152b, 154b the optical path 144 runs through a respective transfer region of the transparent focusing unit 152b, 154b and the pumping branches 164 are transferred to a respective deflection branch 176 and the deflection branches 176 are transferred to a respective pumping branch 164.

In particular, the deflection branches 176 exit and enter the transparent focusing unit 152b, 154b at a side which is, in particular with respect to the axial direction of the optical axis 116, opposite to the side of the focusing unit 152b, 154b at which the pumping branches 164 enter and exit the focusing unit 152b, 154b.

Furthermore, the optical assembly 142b of this radiation field amplifying system 100b comprises a deflection arrangement 172b with a respective set 192 of deflection units 174b associated to the transparent focusing unit 152b, 154b being arranged on a side with respect to the focusing unit 152b, 154b which is with respect to the axial direction of the optical axis 116 opposite to the side at which the laser amplifying component 122 is arranged. Accordingly, the transparent focusing unit 152b, 154b is spatially arranged between the laser amplifying component 122 and the set 192 of deflection units 174b which are associated to this transparent focusing unit 152b, 154b.

Preferably, the deflection units 174b transfer an incoming part 184 of the respective deflection branch 176 which comes from the focusing unit 152b, 154b into an outgoing part 188 which runs at least approximately parallel to the incoming part 184 but with the incoming part 184 and the outgoing part 188 being in a direction which is at least essentially perpendicular to the propagation direction of the pumping radiation field 114 along these parts 184, 188 offset to each other.

For example, the deflection units 174b are built from two deflection elements 222b which are reflective and define an intermediate part 226 of the deflection branch 176 between them as exemplarily shown in fig. 7.

In other variants of the embodiment, the deflection units 174b are built by one deflection element 222, in particular by a prism, as for example explained above in connection with the other embodiment.

Advantageously, in some variants of the embodiment, the optical assembly 142b comprises a correction component 254 which defines a correction branch 252 for correcting at least one mismatch in the pumping branches 164 and/or deflection branches 176, of the optical path.

Preferably, the correction component 254 has in these variants of the embodiment at least one in particular adjustable correction element 260 for adjusting preferably the length of the correction branch 252 for correcting for a mismatch and optimizing the optical path for the pumping radiation field and/or for example for adjusting the shape of the pumping radiation field 114 and therefore advantageously the pumping of the laser active medium 124 is increased.

In other variants of the embodiment in addition and/or in the alternative the deflection branches 176 are adjusted to compensate for mismatches in the focusing condition.

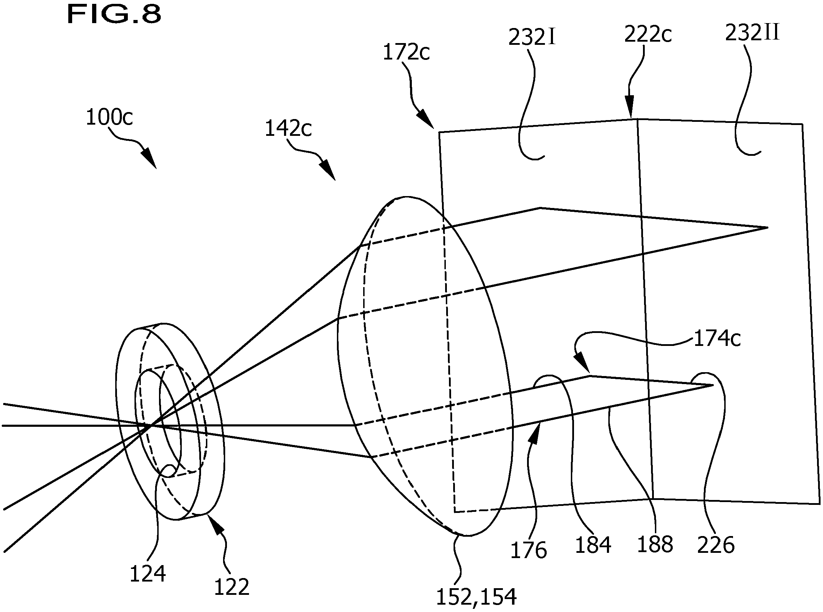

In yet other embodiments of a radiation amplifying system 100c at least several deflection units 174c are built by one deflection element 222c as exemplarily shown in fig. 8.

In particular, the one deflection element 222c has two reflective surfaces 232I and 232II which are arranged in an angle for example of at least approximately 90°. Preferably the two reflective surfaces 232 are at least essentially flat.

For example, the one deflection element 222c is a folded thin material with reflective surfaces.

In some variants the deflection element 222c is a prism.

In particular, the one deflection element 222c is arranged with respect to one of the focusing units 152, 154 such that an incoming part 184 and an outgoing part 188 of a respective deflection branch 176 run at least essentially parallel and offset to each other.

In particular, an intermediate part 226 is defined between the two reflective surfaces 232I and 232II and connects the incoming part 184 and the outgoing part 188 of a deflection branch 176.

In particular, the focusing unit 152, 154 to which the deflection units 174c built by the one deflection element 222c are associated to is transparent for the pumping radiation field 114 and the transparent focusing unit 152, 154 is spatially arranged between the laser amplifying component 122 and the one deflection element 222c, as is exemplarily shown in fig. 8.

In other variants the one deflection element 222c is spatially arranged between the laser amplifying component 222 and the one focusing unit 152, 154 which is in particular in such cases a reflective focusing unit 152, 154.

These embodiments advantageously comprise a correction component 254 defining a correction branch 252 and preferably with an adjustable deflection element 256, in particular as described in connection with the other embodiments.

In particular, therewith a simple set-up and mounting of the optical assembly 142c is enabled with arranging the one deflection element 222c in particular in fixed arrangement with the least one focusing unit 152, 154 and potential and in particular unavoidable mismatches in the optical path 144 defined by the optical assembly 142 can be corrected by the correction component 154.

Depending on the different variants of the embodiment, deflection units 174 associated to the other of the two focusing units 152, 154 are built in an at least basically similar manner by one deflection element 222c or for example as in one of the previously described embodiments.

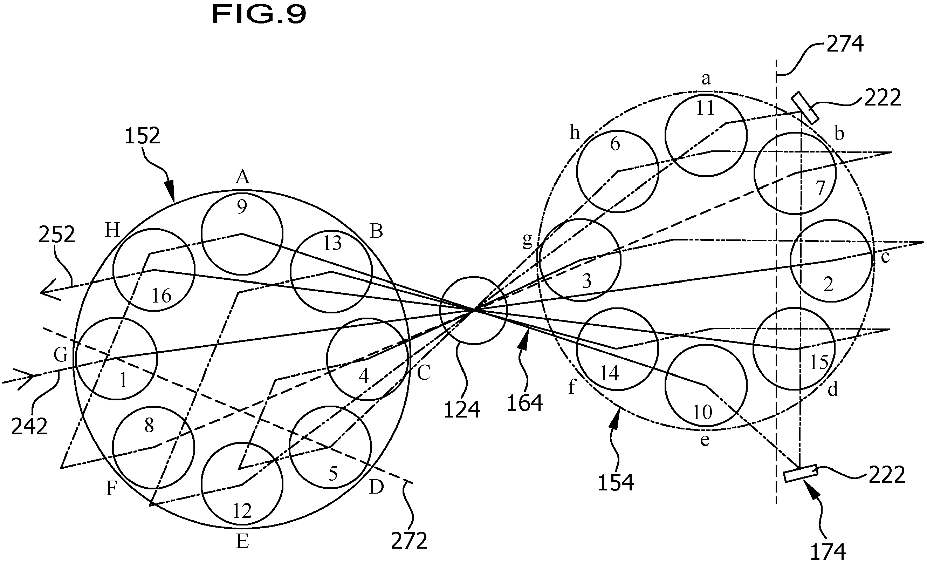

For a variant for which at least several of the deflection units 174 associated with a respective of the two focusing units 152, 154 are each built by one deflection element 222c, the optical path 144 is sketched in fig. 9 exemplarily.

An axis 272 of the one deflection element 222c for the set 192I of deflection units 174 associated to the one focusing unit 152 and an axis 274 of the one deflection element 222c for the set 192II deflection units 174 associated to the other focusing unit 154 are offset to each other and rotated around the optical axis 116 by an angle which in particular corresponds to (90°+360°/2N) with N being the number of pumping branches 164 running through the pumping area 156 of the laser active medium 124.

For example, at the respective axis 272, 274 the two reflective surfaces 232I and 232II meet.

At one focusing unit 152 respective spots are indicated by capital letters and respective spots at the other focusing unit 154 are indicated by small letters and at the respective focusing unit 152, 154 the spots are marked with the respective letter subsequently in a circumferential direction around the optical axis 116. At these spots, a deflection branch 176 is transferred to a pumping branch or vice versa.

In particular, the respective sports at a focusing unit 152, 154 are distanced to the respective neighboring spots with at least approximately the same distance.

The introducing branch 252 hits the one focusing unit 152 at the spot G where it is transferred to a pumping branch 164 which extends until a spot c at the other focusing unit 154 where it is transferred to a deflection branch and is deflected by the associated deflection unit 174 to the spot g at the focusing unit 154. The following spots at the focusing units 152 and 154 at which the optical path 144 runs through and the pumping branch 164 is transferred to a deflection branch 176 or a deflection branch 176 is transferred to a pumping branch 164 are the spot C at focusing unit 152 which is connected by a deflection branch 176 to spot G at focusing unit 152 which is connected by a pumping branch 164 to spot H at focusing unit 154 which is connected by a deflection branch 176 to spot b at the focusing unit 154 which is connected to spot F at focusing unit 152 by a pumping branch and which in turn is connected by a deflection branch to spot A at focusing unit 152 which in turn is connected by a pumping branch to spot E at focusing unit 154.

This spot e is connected to a spot a by a deflection branch 176 defined by another deflection unit 174 built in particular by two separated deflection elements 222 which for example are each a mirror, for shifting in a vertical direction the set-up of the pumping branches 164 and deflection branches 176.

Spot a at focusing unit 154 is connected by a pumping branch to spot E at focusing unit 152 which is connected to a spot B by a deflection branch 176 which in turn is connected by a pumping branch 164 to a spot f at focusing unit 154 which is connected to spot d by a deflection branch 176 from which a pumping branch extends to spot H at focusing unit 152.

Preferably, from spot H a branch extends to a reflective deflection element and/or a shifting unit and/or a reverse element, for example a mirror such that the pumping radiation field 114 propagating along the optical path 144 propagates twice through the optical assembly 142 and in the second turn in the opposite direction as described before.

Preferably, the branch from this spot H and back to the spot H is designed as a correction branch 252 and the deflection element is an in particular adjustable element 260 of the correction component 254. In particular, the correction component 254 is adjustable at least basically as described before.

For example, in some variants the other deflection unit 174 with separated deflection elements 222 is also or in the alternative designed as a correction component 254 and in particular the deflection elements 222 are adjustable arranged for example to each other for adjusting the length of the part defined between them for defining a correction branch.

For example, the one deflection element 222c has a breakthrough if it is so large that it would cover the passage way of the to be amplified radiation field 112 such that the to be amplified radiation field 112 can pass through the breakthrough being disturbed by the one deflection element 222c.

As far as elements and/or features of particular variants of embodiments are not or not in detail described in connection with the particular variant itself they are preferably at least partly built as described in connection with another variant and/or another embodiment such that for the specifications of these elements and/or features it is fully referred to the explanations provided in connection with the other variants and/or other embodiments in order to avoid repetitions.

In some advantageous variants of the embodiments features and/or elements of several variants and/or several embodiments as described before are combined.

### REFERENCE NUMERALS

- 100: radiation amplifying system
- 110: optical unit
- 112: to be amplified radiation field
- 114: pumping radiation field
- 116: optical axis
- 122: laser amplifying component
- 124: laser active medium
- 126: body / heat spreader
- 128: clamping apparatus
- 129: geometrical amplification plain
- 132: optical device
- 142: optical assembly
- 144: optical path
- 152: focusing unit
- 154: focusing unit
- 156: pumping area
- 164: pumping branch
- 172: deflection arrangement
- 174: deflection unit
- 176: deflection branch
- 184: incoming part
- 188: outgoing part
- 192: set of deflection units
- 198: corridor
- 208: focusing element
- 212: reflective surface
- 222: deflection element
- 226: intermediate part
- 232: reflective surface
- 242: introducing branch
- 246: optical system
- 248: deflection element
- 252: correction branch
- 254: correction component
- 256: deflection element
- 258: reverse element
- 260: adjustable correction element
- 262: base surface
- 264: side surface
- 266: tip
- 272: axis
- 274: axis

## Claims

1. Radiation amplifying system (100) comprising a laser active medium (124) for amplifying a to be amplified radiation field (112) and an optical assembly (142) which defines an optical path (144) for a pumping radiation field (114) with which the laser active medium (124) is optically pumped, wherein the optical path (144) comprises a plurality of branches (164, 176, 252) and wherein the optical assembly (142) comprises at least two focusing units (152, 154) and a deflection arrangement (172) wherein the laser active medium (124) is spatially arranged between the at least two focusing units (152, 154) and the focusing units (152, 154) define several pumping branches (164) of the optical path (144) for focusing the pumping radiation field (114) which propagates along the optical path (144) onto a pumping area (156) in the laser active medium (124) and wherein several deflection units (174) of the deflection arrangement (172) define respective deflection branches (176) of the optical path for connecting the several pumping branches (164) and wherein the optical path (144) comprises at least one correction branch (252) for correcting at least one mismatch in the optical assembly (142) to a focusing condition.

2. Radiation amplifying system (100) according to claim 1, wherein the optical assembly (142) is designed, such that at least along the deflection branches (176) the pumping radiation field (114) propagates in an at least approximately collimated manner.

3. Radiation amplifying system (100) according to one of the preceding claims, wherein at least one of the following is provided
- wherein at least one correction branch (252) corrects for a mismatch in a focusing condition of the telescope like optical system of the at least two focusing units (152, 154) and the deflection arrangement (172),
and/or
- wherein at least one correction branch (252) corrects for a mismatch in the 4F-condition for the optical system of at least two focusing units (152, 154) and the deflection arrangement (172),
and/or
- wherein at least one correction branch (252) corrects for that at least along one deflection branch (176) the optical path length is too short.

4. Radiation amplifying system (100) according to one of the preceding claims, wherein the optical assembly (142) comprises at least one correction component (254) which defines at least one correction branch (252).

5. Radiation amplifying system (100) according to one of the preceding claims, wherein in at least one correction branch (252) a mismatch is at least partly corrected for by the optical path length of the at least one correction branch and/or by a correction unit, wherein in particular the at least one correction unit comprises at least one optical element which is arranged for achieving the desired correction.

6. Radiation amplifying system (100) according to any of the two previous claims, wherein the correction component (252) comprises at least one in particular adjustable deflection element (256, 260),
- wherein in particular with the at least one adjustable deflection element (260) an optical path length of the correction branch (252) is adjustable.

7. Radiation amplifying system (100) according to one of the preceding claims, wherein at least one correction branch (252) is adjusted with respect to the shape of the pumping radiation field (114) and/or with respect to an efficiency of the radiation amplifying system (100).

8. Radiation amplifying system (100) according to one of the preceding claims, wherein at least one of the following is provided
- wherein the radiation amplifying system (100) comprises at least one sensor for detecting at least one property of the to be amplified radiation field (112) and/or of the pumping radiation field (114) and/or of the optical assembly (142) and the detected values of the sensor are used to adjust at least one correction branch (252), in particular to adjust at least one adjustable deflection element (260) of the correction component (254),
and/or
- wherein the radiation amplifying system (100) comprises a controller which performs the adjustment, in particular performs the adjustment based on the detected values of the sensor.

9. Radiation amplifying system (100) according to one of the preceding claims, wherein at least one of the following is provided
- wherein at least one correction branch (252) is designed to at least reduce, in particular to at least approximately equalize, a mismatch to which the pumping radiation field (114) is exposed to when propagating along the optical path (144),
and/or
- wherein at least one correction branch (252) is designed to at least reduce, in particular to at least approximately equalize, a mismatch to which the pumping radiation field (114) is exposed to when propagating along the optical path (144) in the part of the optical assembly (142) which is with respect to a propagation direction of the pumping radiation field (114) before this at least one correction branch (252),
and/or
- wherein at least one correction branch (252) is designed to at least reduce, in particular to at least approximately equalize, a mismatch to which the pumping radiation field (114) is exposed to when propagating along the optical path (144) in the part of the optical assembly (142) which is with respect to a propagation direction of the pumping radiation field (114) after this at least one correction branch (252).

10. Radiation amplifying system (100) according to one of the preceding claims, wherein at least one of the following is provided
- wherein at least one correction branch (252) is spatially arranged on a side with respect to one of the at least two focusing units (152, 154) which is opposite to a side at which the laser active medium (124) is arranged,
and/or
- wherein at least one correction branch (252) is spatially arranged in the space between the two focusing units (152, 154).

11. Radiation amplifying system (100), in particular according to one of the preceding claims, comprising a laser active medium (124) for amplifying a to be amplified radiation field (112) and an optical assembly (142) which defines an optical path (144) for a pumping radiation field (114) with which the laser active medium (124) is optically pumped, wherein the optical path (144) comprises a plurality of branches (164, 176, 252) and wherein the optical assembly (142) comprises at least two focusing units (152, 154) and a deflection arrangement (172) wherein the laser active medium (124) is spatially arranged between the at least two focusing units (152, 154) and the focusing units (152, 154) define several pumping branches (164) of the optical path (144) for focusing the pumping radiation field (114) which propagates along the optical path (144) onto a pumping area (156) in the laser active medium (124) and wherein several deflection units (174) of the deflection arrangement (172) define respective deflection branches (176) of the optical path for connecting the several pumping branches (164) and wherein the pumping radiation field (114) is introduced to the optical system of the at least two focusing units (152, 154) and the deflection arrangement (156) with a deviation from a manner set by a focusing condition, in particular with a deviation from a collimated manner, wherein the deviation corresponds at least partly to a mismatch in the optical system of the at least two focusing units (152, 154) and the deflection arrangement (142) to a focusing condition.

12. Radiation amplifying system (100) according to one of the preceding claims, wherein at least one of the following is provided
- wherein at least one focusing unit (152, 154) is transparent at least for a pumping radiation field (114),
and/or
- wherein at least one focusing unit (152, 154) is reflective for at least the pumping radiation field (114).

13. Radiation amplifying system (100) according to one of the preceding claims, wherein at least several deflection units (174) of the deflection arrangement (156) are arranged spatially between the at least two focusing units (152, 154).

14. Radiation amplifying system (100) according to one of the preceding claims, wherein at least several deflection units (174) of the deflection arrangement (156) are arranged spatially on a side which is with respect to one focusing unit (152, 154) opposite to a side at which the laser active medium (124) is arranged.

15. Radiation amplifying system (100) according to one of the preceding claims, wherein at least one of the following is provided
- wherein each deflection unit (174) of at least several deflection units (174) of the deflection arrangement (156) is built by a respective single deflection element (222) which in particular transfers an incoming part of a deflection branch (176) to an outgoing part of the deflection branch (176),
and/or
- wherein each deflection unit (174) of at least several deflection units (174) of the deflection arrangement (156) is built by several deflection elements (222) wherein in particular an incoming part of a deflection branch (176) is deflected from one deflection element (222) to another deflection element of the same deflection unit (174) and one deflection element (222) of the deflection unit (174) provides an outgoing part of the deflection branch (176),
and/or
- wherein at least one deflection element (222) is part of several different deflection units (174).
